# EUROPEAN PATENT APPLICATION

(11) **EP 1 659 575 A1**
(43) Date of publication of application: **24.05.2006**
(21) Application number: 05257189.0
(22) Date of filing: 22.11.2005
(51) Int. Cl.: G11B 5/82, G11B 5/73, G11B 5/84, C23C 14/02, G11B 5/66

(54) **Magnetic recording medium and manufacturing method thereof, magnetic storage apparatus, substrate and texture forming apparatus**

(30) Priority: 22.11.2004 JP 2004338211; 08.09.2005 JP 2005261232
(71) Applicant: Fujitsu Ltd., Kawasaki-shi, Kanagawa 211-8588 (JP)
(72) Inventor: Sato, Kenji, Higashine-shi Yamagata 999-3701 (JP)
(74) Representative: Hitching, Peter Matthew

(57) **Abstract**

A magnetic recording medium (10) has a texture (11a) that can improve a degree of orientation of a recording layer (18). The magnetic recording medium records information by magnetizing the recording layer (18) in a recording direction. A foundation layer (13) is formed on the substrate. The recoding layer (18) is formed on the foundation layer (13). The texture (11a) having a plurality of grooves (11a-1) is formed under the foundation layer (13). The grooves (11a-1) extend in a direction substantially parallel to the recording direction and are arranged at substantially predetermined intervals in a direction perpendicular to the recording direction.

## Description

### BACKGROUND OF THE INVENTION

### 1. Field of the Invention

The present invention generally relates to magnetic recording techniques and, more particularly, to a magnetic recording medium used in an in-plane magnetic recording method and a manufacturing method thereof.

### 2. Description of the Related Art

In recent years, magnetic recording device such as, for example, a magnetic disk drive has been remarkably improved in recording density with adoption of a spin valve reproduction element to a magnetic head as well as a reduction in medium noise of magnetic disks, which achieves a plane recording density exceeding 100 Gbit/square inches.

A magnetic disk is constituted by a foundation layer, a recording layer and a protective film stacked in that order on an aluminum alloy substrate or a glass substrate. The recording layer is mainly made by a CoCr base alloy having a hexagonal closest packing (hcp) crystal structure. The easy magnetization axis of the CoCr base alloy in the recording layer is oriented in a circumferential direction by forming a lot of minute grooves, that is, so-called texture, on the foundation layer such as, for example, a surface of a substrate, which increases a coercive force in the circumferential direction and also increases a degree of orientation in the circumferential direction. As a result, a magnetic parametric performance of magnetic disks is improved. It should be noted a degree of orientation is represented by a ratio Hcc/Hcr of a coercive force Hcc in a circumferential direction to a coercive force Hcr in a radial direction perpendicular to the circumferential direction.

The texture mentioned above is mainly a mechanical texture that is formed mechanically on the aluminum ally substrate or the glass substrate. The mechanical texture is formed by a lot of polishing scratches along a circumferential direction on a surface of a substrate by supplying a slurry containing an adhesive agent onto a pad and bringing the pad retaining the slurry into contact with the surface of the substrate while rotating.

Additionally, as a method for orienting the easy magnetization axis of the recording layer instead of the mechanical texture, there is suggested in Japanese Laid-Open Patent Application No. 6-243463 a method of controlling growth of a foundation layer or a recording layer by a difference in surface energy of the substrate by irradiating an ultraviolet beam or an ion beam.

According to the mechanical texture, grooves may be formed with variation in widths of the grooves, variation in intervals between the grooves, depths of the grooves, etc., due to variation in a particle size. That is, the abrasive agent may have dispersion in particle size of the abrasive agent, and there is a difference between a size of the particles newly supplied to the pad and a size of the particles that have been worn during a time of use on the pad, which may result in a texture having large dispersion. In such a texture, internal stresses caused by the irregularity due to the grooves becomes uneven. The internal stresses are applied to atoms and particles of the magnetic materials constituting a recording layer when the recording layer is deposited on the texture via a foundation layer. As a result, an orientation of the easy magnetization axis of crystal grains forming the recording layer is disordered due to the uneven internal stresses.

As measures for the above-mentioned problem, an attempt has been made to uniform the distribution of the grooves in the mechanical texture by causing the groves to intersect with each other. However, such an attempt is not sufficient to completely uniform the internal stresses. Rather, a width and depth of the grooves is increased at positions where grooves are intersecting with each other, which produces local depressions that cause a local decrease, that is, a so-called drop out in a reproduction output. Especially, under the circumference in which a recording density is further increased and a floating distance of a magnetic head is further decreased, there is a demand for improving uniformity in a degree of orientation of the recording layer, but there is a limit for the conventional mechanical texture to satisfy such a demand.

Additionally, in the method disclosed in the above-mentioned patent document, an ion beam or the like that is confined into a bam diameter of several tens nanometers must be irradiated onto a surface of a substrate in a state of concentric circles with a fine pitch, which requires an extremely long time to process a single substrate. Thus, a number of substrates that can be process in a unit time is extremely small, which result in an increase in a manufacturing cost. Although the number of substrates that can be processed in a unit time can be increased by installing many ion beam irradiation apparatuses, an equipment cost is increased very much, which results in an increase in the manufacturing cost. Additionally, the surface energy easily changes due to contamination of the surface of the substrate or exposure to plasma or radicals, which may cause the orientation of easy magnetization axis to be unstable.

### SUMMARY OF THE INVENTION

It is a general object of the present invention to provide an improved and useful magnetic recording medium in which the above-mentioned problems are eliminated.

A more specific object of the present invention is to provide a magnetic recording medium having a texture that can improve a degree of orientation of a recording layer and a manufacturing method of such a magnetic recording medium.

In order to achieve the above-mentioned objects, there is provided according to one aspect of the present invention a magnetic recording medium for recording information by magnetizing a recording layer in a predetermined recording direction, the magnetic recording medium comprising: a substrate; a foundation layer formed on the substrate; and the recoding layer formed on the foundation layer, wherein a texture having a plurality of grooves is formed under the foundation layer, the grooves extending in a direction substantially parallel to the predetermined recording direction and being arranged at substantially predetermined intervals in a direction perpendicular to the predetermined recording direction. In the magnetic recording medium according to the present invention, the texture may be formed on a surface of the substrate.

According to the present invention, the texture has the plurality of grooves that are parallel to the recording direction and arranged at the predetermined intervals in the direction perpendicular to the recording direction, and, thereby, the easy magnetization axis of the crystal grains of the recording layer can be oriented in the recording direction. As a result, a degree of orientation of the recording layer in the recording direction is improved, which improves an electromagnetic conversion characteristic and achieves a high recording density. The degree of orientation of the recording layer in the recording direction is represented by a ratio H1/H2 of a coercive force H1 in the recording direction and a coercive force H2 in a direction perpendicular to the recording direction within the recording layer. It should be noted that the recording direction corresponds to a circumferential direction when the magnetic recording medium is a magnetic disk, and the degree of orientation in the recording direction refers to a degree of orientation in a circumferential direction. That is, the degree of orientation in a circumferential direction is represented by a ration Hcc/Hcr of a coercive force Hcc in a circumferential direction and a coercive force Hcr in a radial direction perpendicular to the circumferential direction.

The magnetic recording medium according to the present invention may further comprise a texture layer formed on the substrate, and the grooves may be formed on a surface of the texture layer. Since the texture layer can be a microscopically homogeneous layer, the configuration of the grooves and the intervals of the grooves in the direction perpendicular to the recording direction can be uniform, which achieves a uniform orientation of the recording layer in the magnetic recording medium.

In the magnetic recording medium according to the present invention, the grooves may be formed in a self-assembling manner by irradiating an ion beam onto the surface of the substrate in a predetermined direction. The grooves may be arranged in a direction perpendicular to the recording direction at substantially predetermined intervals.

According to the above-mentioned invention, the texture having many grooves substantially parallel to each other can be formed in a self-assembling manner by irradiating an ion beam onto a substrate surface in the predetermined direction. Such a texture can improve a degree of orientation of the recording layer in the recording direction. Thus, an electromagnetic conversion characteristic is improved and a high recording density is achieved.

In the magnetic recording medium according to the present invention, the substrate may have a circular shape and the grooves may be formed along a circumferential direction of the substrate. In the magnetic recording medium according to the present invention, the predetermined intervals may be selected from values within a range from 8 nm to 33 nm. In the magnetic recording medium according to the present invention, a number of the grooves per 1 micrometer in a direction perpendicular to the recording direction may be within a range from 30 to 125. In the magnetic recording medium according to the present invention, the texture may include a plurality of convex parts each having a cross section taken along a direction perpendicular to the recording direction is convex upward, each of the convex parts being arranged between the adjacent grooves and extending in the recording direction.

In the magnetic recording medium according to the present invention, at least a part of the substrate including the surface on which the texture is formed may be made of an amorphous material or a polycrystalline material. In the magnetic recording medium according to the present invention, wherein the texture layer may be made of an amorphous material or a polycrystalline material.

In the magnetic recording medium according to the present invention, the substrate may be selected from a group consisting of a glass substrate, an NiP plating aluminum alloy substrate, a silicon substrate, a plastic substrate, a ceramic substrate and a carbon substrate.

In the magnetic recording medium according to the present invention, at least a part of the substrate including the surface on which the texture is formed may be made of a dielectric material. The dielectric material may be selected from a group consisting of a metal oxide, a metal nitride and a metal carbide. In the magnetic recording medium according to the present invention, the texture layer may be formed of a dielectric material. The dielectric material may be selected from a group consisting of a metal oxide, a metal nitride and a metal carbide.

In the magnetic recording medium according to the present invention, the foundation layer may be made of Cr or a Cr-X alloy, wherein X is a material selected from a group consisting of Mo, W, V, B and an alloy of the aforementioned.

The magnetic recording medium according to the present invention may further comprise a seed layer between the substrate and the foundation layer, wherein the seed layer may be formed of a material selected from a nonmagnetic NiP, a nonmagnetic CoW, a nonmagnetic CrTi and an alloy containing three or more elements and an alloy of the aforementioned as a main component.

The magnetic recording medium according to the present invention may further comprise a first magnetic layer, a nonmagnetic coupling layer, a second magnetic layer that are stacked on the foundation layer, wherein the first magnetic layer and the second magnetic layer are exchange-coupled with each other, and a direction of magnetization of the first magnetic layer and a direction of magnetization of the second magnetic layer are parallel to but opposite to each other in a state where an external magnetic field is not applied.

In the magnetic recording medium according to the present invention, the recording layer may include a magnetic layer of a material selected from a group consisting of Co, Ni, Fe, an Ni base alloy, an Fe base alloy, CoCr, a CoCr base alloy, CoCrTa, a CoCrTa base alloy, CoCrPt and a CoCrPt alloy.

Additionally, there is provided according to the present invention a magnetic recording apparatus comprising: a plurality of track areas formed on a substrate and extending in a recording direction, the track areas being arranged in a direction of a width of the track areas perpendicular to the recording direction; and a plurality of inter-track areas provided between adjacent ones of the track areas, respectively, wherein each of the track areas includes a foundation layer formed on the substrate and a recording layer formed on the foundation layer; parts of the recoding layers in the adjacent ones of the track areas is separated from each other by on of the inter-track areas; and a texture having a plurality of grooves is formed under the foundation layer, the grooves extending in a direction substantially parallel to the predetermined recording direction and being arranged at substantially predetermined intervals in a direction perpendicular to the predetermined recording direction. In the above-mentioned magnetic recording medium, the substrate may have surface parts corresponding to the track areas protruding from surfaces corresponding to the inter-track areas.

Additionally, there is provided according to the present invention a magnetic recording apparatus comprising: a plurality of track areas formed on a substrate and extending in a recording direction, the track areas being arranged in a direction of a width of the track areas perpendicular to the recording direction; and a plurality of inter-track areas provided between adjacent ones of the track areas, respectively, wherein each of the track areas includes a plurality of recording cells arranged in the recording direction and a plurality of inter-cell areas each of which is sandwiched by adjacent ones of the recording cells; each of the recording cells includes a foundation layer formed on the substrate and a recording layer formed on the foundation layer; the recoding layers in adjacent ones of the recording cells are separated from each other by one of the inter-cell areas; and a texture having a plurality of grooves is formed on a surface of the substrate, the grooves extending in a direction substantially parallel to the recording direction and being arranged at substantially predetermined intervals in a direction perpendicular to the recording direction.

In the above-mentioned magnetic recording medium, the surface of the substrate may includes surface parts corresponding to the recording cells and protruding from surface parts corresponding to the inter-cell areas, and the texture may be formed on the surface parts corresponding to the recording cells. In the above-mentioned magnetic recording medium, the recording layer may be formed of a ferromagnetic material selected from a group consisting of Co, CoCr and CoCrPt-M2, where M2 is a metal selected from B, Mo, Nb, Ta, W, Cu and an alloy of the aforementioned metal, and the ferromagnetic material of either one of Co and CoCr has Cr contents greater than 0 atomic % and equal to or smaller then 25 atomic %.

In the above-mentioned magnetic recording medium, the recording layer on each of the recording cells may be magnetized in one direction. A coercive force of the recording layer in an in-plane direction may be set within a range from 7.9 kA/m to 395 kA/m.

In the above-mentioned magnetic recording layer, the texture may be formed on surface parts corresponding to the recording cells. In the above-mentioned magnetic recording layer, each of the recording cells may have a cross-section having a substantially rectangular shape or a substantially elliptic shape.

Additionally, there is provided according another aspect of the present invention a substrate configured to be used in a magnetic recording medium for recording information by magnetizing a recording layer in a predetermined recording direction, the substrate comprising: a surface above which the recording layer is formed; and a texture formed on the surface, the texture having a plurality of grooves extending in a direction substantially parallel to the predetermined recording direction and arranged in a direction perpendicular to the recording direction at substantially predetermined intervals.

Further, there is provided according to another aspect of the present invention a substrate configured to be used in a magnetic recording medium for recording information by magnetizing a recording layer in a predetermined recording direction, the substrate comprising: a texture layer; and a texture formed on a surface of the texture layer, the texture having a plurality of grooves extending in a direction substantially parallel to the predetermined recording direction and arranged in a direction perpendicular to the recording direction at substantially predetermined intervals.

Additionally, there is provided according to another aspect of the present invention a substrate configured to be used in a disk-shaped magnetic recording medium, the substrate having a texture formed on a surface thereof, the texture having a plurality of grooves formed on the surface and extending in a circumferential direction of the substrate, the plurality of grooves being formed in a self-assembling manner by irradiating an ion beam onto the surface of the substrate in a predetermined direction.

Additionally, there is provided according to another aspect of the present invention a substrate configured to be used in a disk-shaped magnetic recording medium, the substrate having a texture layer having a surface on which a texture is formed, the texture having a plurality of grooves formed on the surface and extending in a circumferential direction of the substrate, the plurality of grooves being formed in a self-assembling manner by irradiating an ion beam onto the surface of the texture layer in a predetermined direction.

Additionally, there is provided according to another aspect of the present invention a magnetic storage apparatus comprising: one of the above-mentioned magnetic recording media; and a recording and reproducing head including a recording element and a reproducing element having a magnetoresistive element.

Additionally, there is provided according to another aspect of the present invention a magnetic disk apparatus comprising: a magnetic disk; and a recording and reproducing head including a recording element and a reproducing element having a magnetoresistive element, wherein the magnetic disk including: a disk-shaped substrate; a foundation layer formed on the substrate; a recording layer formed on the foundation layer; and a texture having a plurality of grooves formed on the substrate, the grooves extending in a circumferential direction of the substrate and arranged in a radial direction of the substrate at substantially predetermined intervals.

Further, there is provided according to another aspect of the present invention a manufacturing method of a magnetic recording medium that has a substrate and records information by magnetizing a recording layer formed above the substrate in a predetermined recording direction, the manufacturing method comprising: a step of forming a texture under the recording layer; and a step of forming a foundation layer on the texture, wherein the step of forming the texture includes forming a plurality of grooves by irradiating an ion beam in a predetermined direction, the grooves extending in the recording direction.

In the above-mentioned manufacturing method, the step of forming the texture may form the grooves on the substrate above which the recording layer is formed. The above-mentioned manufacturing method may further include a step of forming a dielectric film on the substrate above which the recording layer is formed, wherein the step of forming the texture may form the grooves on the dielectric film. In the manufacturing method according to the present invention, the predetermined direction lies within a plane defined by a direction perpendicular to the recording direction and a direction perpendicular to a surface of the substrate, and the predetermined direction is inclined with respect to the direction perpendicular to the surface of the substrate by a predetermined irradiating angle.

In the manufacturing method according to the present invention, the predetermined direction may lie within a plane defined by a substantially radial direction of the substrate and a direction perpendicular to the a surface of the substrate, and the predetermined direction may be inclined with respect to the direction perpendicular to the surface of the substrate by a predetermined irradiating angle. The irradiating angle may be set to an angle within a range from 45 degrees to 70 degrees with respect to the direction perpendicular to the surface of the substrate.

In the above-mentioned manufacturing method, the irradiating angle may be set to an angle within a range from 45 degrees to 70 degrees with respect to the direction perpendicular to the surface of the substrate. In the above-mentioned manufacturing method, a shielding plate may be provided above the substrate to shield substrate from the ion beam, and the shielding plate may have an elongated opening in a radial direction of the substrate. In the above-mentioned manufacturing method, a shielding plate may be provided above the substrate to shield substrate from the ion beam, and the shielding plate may have an elongated opening in a radial direction of the substrate.

In the above-mentioned manufacturing method, the ion beam may have a beam shape of an elongated rectangular or elliptic shape in a predetermined direction, and the ion beam may be irradiated so that the predetermined direction matches a radial direction of the substrate. In the above-mentioned manufacturing method, the ion beam may be irradiated toward the substrate while rotating the substrate. The above-mentioned manufacturing method may further comprise a step of controlling intervals of the grooves in a direction perpendicular to the recording direction in accordance with an acceleration voltage of the ion beam. The above-mentioned manufacturing method, the ion beam may be selected from a group consisting of an Ar ion beam, a Kr ion beam and a Xe ion beam.

Additionally, there is provided according to another aspect of the present invention a texture forming apparatus comprising: a vacuum chamber; a substrate holding member on which a substrate is placed, the substrate holding member being provided in the vacuum chamber; and an ion irradiating unit provided above a surface of the substrate, wherein the ion irradiating unit irradiates an ion beam onto the surface of the substrate in a predetermined direction so as to form a plurality of grooves extending in a predetermined direction on the surface of the substrate.

In the texture forming apparatus according to the present invention, the ion irradiating unit may include an ionizing part that ionizes at least one kind of inert gas selected from a group consisting of Ar, Kr and Xe and an acceleration electrode that draws the ionized gas from the ionizing part and accelerates the drawn ionized gas, and the acceleration electrode may have a plurality of openings through which the ionized gas is passed, the openings being located in an elongated rectangular or elliptic area in a predetermined direction.

The texture forming apparatus according to the present invention may further comprise a shielding plate between the ion irradiating unit and the substrate in the vacuum chamber, wherein the shielding plate has an elongated rectangular opening in a predetermined direction. The texture forming apparatus according to the present invention may further comprise a rotational drive part that rotates the substrate holding member.

Other objects features and advantages of the present invention will become more apparent from the following detailed description when read in conjunction with the accompanying drawings.

### BRIEF DESCRIPTION OF THE DRAWINGS

FIG. 1 is a cross-sectional view of a magnetic recording medium according to a first embodiment of the present invention;
FIG. 2 is an illustration of a part of a substrate having a texture formed thereon;
FIG. 3A is an illustration of an AFM (atomic force microscope) image of a surface of the substrate on which the texture is formed;
FIG. 3B is an enlarged illustration of a part A of FIG. 3A;
FIG. 4 is an illustration of an AFM image of the surface of the substrate on which another texture is formed;
FIG. 5A is a cross-sectional view of a part of the substrate for explaining a manufacturing method of the magnetic recording medium according to the first embodiment of the present invention;
FIG. 5B is a cross-sectional view of the magnetic recording medium according to the first embodiment of the present invention;
FIG. 6 is an illustration of an entire texture forming apparatus;
FIG. 7 is a plan view of the texture forming apparatus shown in FIG. 6.
FIG. 8A is a plan view of an example of a shielding electrode and an acceleration electrode of an ion gun shown in FIG. 7;
FIG. 8B is a plan view of another example of the shielding electrode and the acceleration electrode of the ion gun shown in FIG. 7;
FIG. 9 is an illustration of another example of the texture forming apparatus;
FIG. 10 is a cross-sectional view of a variation of the magnetic recording medium according to the first embodiment of the present invention;
FIG. 11A is an illustration for explaining a degree of orientation of a recording layer in a circumferential direction in examples 1 through 3;
FIG. 11B is an illustration for explaining an average groove depth of the surface of the substrate provided with a texture formed thereon;
FIG. 12A is a graph showing a cross-sectional configuration of a substrate surface in an example 3;
FIG. 12B is a graph showing a distribution of groove depths of the substrate surface in the example 3;
FIG. 13A is a graph showing a cross-sectional configuration of the substrate surface in a comparative example 1;
FIG. 13B is a graph showing a distribution of groove depths of the substrate surface in the comparative example 1;
FIG. 14A is a graph showing a cross-sectional configuration of a surface of a glass substrate before a texture is formed;
FIG. 14B is a graph showing a distribution of groove depths of the substrate surface before a texture is formed;
FIG. 15 is an AFM image of the surface of the magnetic disk of an example 4;
FIG. 16 is a diagram showing the texture forming conditions, the textures and the characteristic of the magnetic disks of the examples 5-1, 5-2 and 5-3 and the comparative example 2.
FIG. 17 is a graph showing a relationship between an average groove width and an acceleration voltage of an ion beam of textures in the examples 5-1 through 5-3;
FIG. 18 is a graph showing changes in the residual magnetization of the examples 5-1 and 5-2 with passage of time;
FIG. 19 is a cross-sectional view showing a part of a magnetic recording medium according to a second embodiment of the present invention;
FIG. 20 is a cross-sectional view of a variation of the magnetic recording medium according to the second embodiment of the present invention;
FIG. 21 is a cross-sectional view showing a part of a magnetic recording media according to a third embodiment of the present invention;
FIG. 22 is a plan view of a part of the magnetic recording medium according to the third embodiment of the present invention;
FIG. 23 is a plan view of a part of a magnetic recording medium according to a variation of the third embodiment of the present invention;
FIG. 24 is a cross-sectional view of a part of a magnetic recording medium according to another variation of the third embodiment of the present invention; and
FIG. 25 is a plan view of a magnetic storage apparatus according to a fourth embodiment of the present invention.

### DETAILED DESCRIPTION OF THE PREFERRED EMBODIMENTS

A description will now be given, with reference to the drawings, of embodiments according to the present invention.

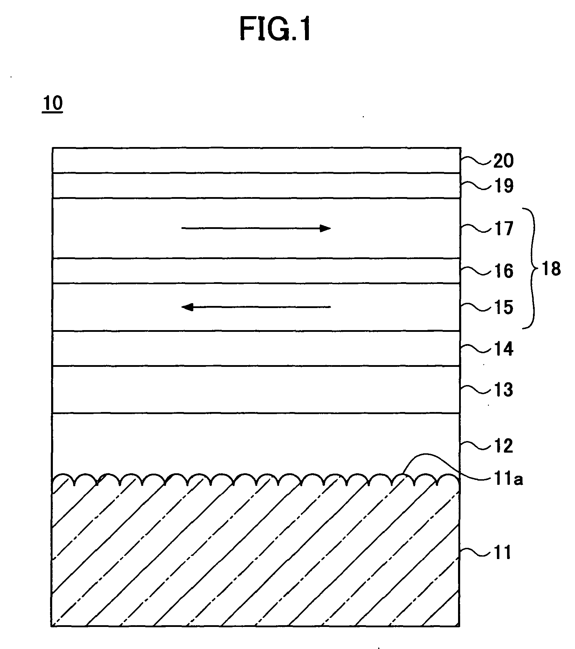

FIG. 1 is a cross-sectional view of a magnetic recording medium according to a first embodiment of the present invention.

Referring to FIG. 1, the magnetic recording medium according to the first embodiment of the present invention comprises: a substrate 11 having a surface on which a texture is formed; and a seed layer 12, a foundation layer 13, a nonmagnetic intermediate layer 14, a first magnetic layer 15, a nonmagnetic coupling layer 16, a second magnetic layer 17, a protective film 19 and a lubrication layer 20 that are stacked in that order. It should be noted that although irregularity is formed on a surface of each of the seed layer 12 through the protective film 19, which are deposited on a texture 11a, due to grooves of the texture 11a, illustration of the irregularity is omitted for the sake of convenience of explanation.

In the magnetic recording medium 10, the texture 11a is formed on the surface of the substrate 11 by a method different from the conventional mechanical texture so that the easy magnetization axis of crystal grains constituting the recording layer 18 is oriented in a direction of the texture 11a, which increases a coercive force of the recording layer 18 in the direction of the texture 11a. In the present specification, the direction of the texture refers to an extending direction of the grooves constituting the texture 11a.

When the magnetic recording medium 10 is a magnetic disk, the texture is formed in a circumferential direction, which improves a circumferential direction coercive force Hcc, a degree of orientation in a circumferential direction (=circumferential coercive force Hcc/radial direction coercive force Hcr) and a circumferential direction square ratio S*.

A description will be given below of the magnetic recording medium 10 in detail.

There is no special limitation to the substrate 11, and, for example, a glass substrate, a NiP plated aluminum alloy substrate, a silicone substrate, a plastic substrate, a ceramic substrate, a carbon substrate, etc., may be used for the substrate 11. The glass substrate is preferable in view of the point that a preferable texture, which will be explained later in detail, can be formed. As for the glass substrate, there are a soda lime glass and a boride silicate glass that are applied with a chemically strengthening process or an aluminum borate silicate glass substrate and a crystallization glass substrate.

There is no special limitation to the seed layer 12, and the seed layer 12 can be formed of, for example, NiP, CoW, CrTi or an alloy as a main component containing more than three aforementioned elements. When the seed layer 12 is formed of an amorphous material such as Nip, it is preferable that the surface of the seed layer 12 is subjected to an oxidation process since the in-plane orientation of the first magnetization layer 15 and the second magnetization layer 17 is improved. Moreover, the seed layer 12 can be formed of an alloy having a B2 crystal structure such as RuAl, NiAl, FeAl, etc., or an alloy film having a B2 crystal structure on the above-mentioned non-magnetism seed layer material film. Moreover, as for the thickness of the seed layer 12, the thickness of the seed layer 12 is set within a range from 5 nm to 30 nm, and preferably, within a range from 5 nm to 15 nm. It should be noted that the seed layer 12 is not always provided.

The foundation layer 13 is formed of Cr or a Cr-X alloy (X=Mo, W, V, B and Mo and an alloy of the aforementioned). The foundation layer 13 is epitaxially grown on the seed layer 12, and a plane (001) or a plane (112) exhibits good orientation for the direction of the growth direction. The substrate layer 13 may be formed by a plurality of layers formed of Cr or a Cr alloy stacked one on another. By stacking a plurality of layers, the crystal grains of the foundation layer 13 are prevented from being enlarged, and further the crystal grains of the first magnetization layer 15 and the second magnetization layer 17.

The nonmagnetic intermediate layer 14 is formed of CoCr or a nonmagnetic alloy having a hcp structure made by adding an element of an alloy M to CoCr. A thickness of the nonmagnetic intermediate layer 14 is set within a range from 0.5 nm to 5 nm. Here, M is an alloy selected from Pt, B, Mo, Nb, Ta, W, Cu and an ally of aforementioned elements. The nonmagnetic intermediate layer 14 epitaxially grows while taking over the crystallinity and a size of the crystal grains of the foundation layer 13. Thus, the nonmagnetic intermediate layer 14 improves the crystallinity of the first magnetic layer 15 and the second magnetic layer 17 that epitaxially grow on the nonmagnetic intermediate layer, and reduces a distribution range of the size of the crystal grains, which promotes orientation of easy magnetization axis in an in-plane direction. Moreover, the nonmagnetic intermediate layer 14 may be a layer including a plurality of layers formed of the above-mentioned nonmagnetic alloy so that orientation of the first magnetic layer 15 and the second magnetic layer 17 is improved further. It should be noted that an internal stress may be generated in an in-plane direction layer on an interface between the non-magnetic layer 14 and the first magnetic layer 15 or within the first magnetic layer 15 by changing a lattice constant with respect to the lattice constant of the first magnetic layer 15 or the second magnetic layer 17 so that the coercive force of the first magnetic layer 15 is increased. It is not always necessary to provide the nonmagnetic intermediate layer 14.

The recording layer including the first magnetic layer 15, the nonmagnetic coupling layer 16 and the second magnetic layer 17 has an exchange coupling structure in which the first magnetic layer 15 and the second magnetic layer 17 are antiferromagnetically exchange-coupled to each other through the nonmagnetic coupling layer 16. The magnetization of oriented in an in-plane direction of the first magnetic layer 15 and the second magnetic layer 17 are parallel but opposite to each other in a state where an external magnetic field is not applied.

A thickness of the first magnetic layer 15 is set within a range from 5 nm to 20 nm, and the first magnetic layer 15 is formed of Co, Ni, Fe, a Co base alloy, a nickel base alloy, an Fe base alloy, etc. In the Co base alloy, CoCr, CoCrTa and CoCrPt are preferable, and CoCr-M1 (a kind selected from M1=B, Mo, Nb, Ta, W, Cu, Pt and an alloy of the aforementioned elements) is more preferable in respect of the controllability of a size of the crystal grains. Moreover, the first magnetic layer 15 may includes a plurality of layers formed of the above-mentioned materials stacked one on another so as to improve the.

The nonmagnetic coupling layer 16 is formed of, for example, Ru, Rh, Ir, an Ru base alloy, an Rh base alloy, an Ir base alloy, etc. Among these elements, Rh and Ir have an fcc structure while Ru has an hcp structure, and, for example, if the second magnetic layer 17 is formed of a CoCrPt base alloy, Ru or an Ru base alloy is suitable since the lattice constant a of Ru is 0.27 nm (a=0.27 nm) while the lattice constant a of the CoCrPt base alloy is 0.25 nm (a=0.25 nm). As for the Ru base alloy, one of Co, Cr, Fe, Ni and Mn or an alloy of Ru and the aforementioned elements is suitable.

Additionally, a thickness of the nonmagnetic coupling layer 16 is set within a range from 0.4 nm to 1.5 nm, and preferably a range from 0.6 nm to 0.9 nm (in an Ru alloy, a range from 0.8 nm to 1.4 nm although it depends on an amount of content). Since the first magnetic layer 15 and the second magnetic layer 17 are exchange-coupled through the nonmagnetic coupling layer 16 and the thickness of the nonmagnetic coupling layer 16 is set in the above-mentioned range, the magnetization of the first ferromagnetic layer 26 and the magnetization of the second magnetic layer 17 are coupled in an antiferromagnetic manner, which results in the magnetizations in parallel in a state where no external magnetic field is applied. Especially, it is preferable to match the thickness of the nonmagnetic coupling layer 16 to an antiferromagnetic peak of an oscillation type exchange-coupling that depends on the thickness of the nonmagnetic coupling layer.

The second magnetic layer 17 has a thickness set within a range from 5 nm to 20 nm, and is formed of Co, Ni, Fe, a Co base alloy, an Ni base alloy, an Fe base alloy, etc. As for the Co base alloy, especially CoCr, a Cocr base alloy, CoCrTa, a CoCrTa base alloy, CoCrPt, and a CoCrPt base alloy are preferable, and CoCrPt-M2 (a kind selected from M2=B, Mo, Nb, Ta, W, Cu and an alloy of the aforementioned elements) is more preferable. Additionally, in the relationship between the first magnetic layer 15 and the second magnetic layer 17, it is preferable to set residual magnetizations Mr1 and Mr2 of the first and second magnetic layers 15 and 17 and the thicknesses t1 and t2 of the first and second magnetic layers 15 and 17 are set as Mr1×t1<Mr2×t2. The second magnetic layer 17 has magnetization of the same direction as a net residual magnetization, which permits accurate recording of information on the second magnetic layer 17 in response to a reverse position of the recording magnetic field of the magnetic heads. It should be noted that the above-mentioned relationship can be se as Mrlxtl>Mr2xt2. If the first magnetic layer 15 and the second magnetic layer 17 are made by thin films, the above-mentioned problems are eliminated.

Moreover, the material that forms the second magnetic layer 17 may be different from the material that forms the first magnetic layer 15. For example, the material that forms the second magnetic layer 17 is selected from materials having an anisotropic magnetic field larger than that of the material that forms the first magnetic layer 15. As a method for selecting such a material, Pt is not added to the first magnetic layer and Pt is added to the second magnetic layer, or a Pt concentration of the second magnetic layer is set higher than that of the first magnetic layer.

As mentioned above, in the recording layer 18, the first magnetic layer 15 and the second magnetic layer 17, which are stacked with the nonmagnetic coupling layer 16 interposed therebetween, are antiferromagnetically exchange-coupled with each other. Therefore, a volume of the minimum record unit formed in the recording layer 18 when recording is a sum of a volume of the crystal grains that forms the magnetizations of the first magnetic layer 15 and the second magnetic layer 17 that are aniferromagnetically exchange-coupled with each other, and the volume is larger than that of a case where the recording layer is formed by a single magnetic layer. Consequently, a reduction in the residual magnetization of the recording layer with respect to passage of time after recording is suppressed, which improves a thermal stability.

It should be noted that the recording layer 18 is not limited to the structure of two magnetic layers, and may be formed by three or more stacked magnetic layers. Additionally, the nonmagnetic coupling layer 16 is provided between adjacent magnetic layers so as to antiferromagnetically exchange-couple the adjacent magnetic layers with each other.

As a variation of the magnetic recording layer according to the present embodiment, the recording layer 18 may be formed by a single magnetic layer, that is, for example, the recording layer 18 may be formed solely by the second magnetic layer 17.

The protective film 19 has a thickness set within a range from 0.5 nm to 10 nm (preferably a range from 0.5 nm to 5 nm), and is formed of diamond-like carbon, carbon nitride, amorphous carbon, etc.

There is no special limitation for the lubrication layer 20. For example, an organic liquid lubricant may be used that has a main chain of a perfluoro polyether and a terminal group of -OH, a benzen ring. It should be noted that the lubricant is selected in accordance with the material of the protective film 19. Additionally, the lubrication layer 20 may be omitted in accordance with the kind of the protective film 19.

A description will now be given of the texture 11a that relates to a feature of the present invention.

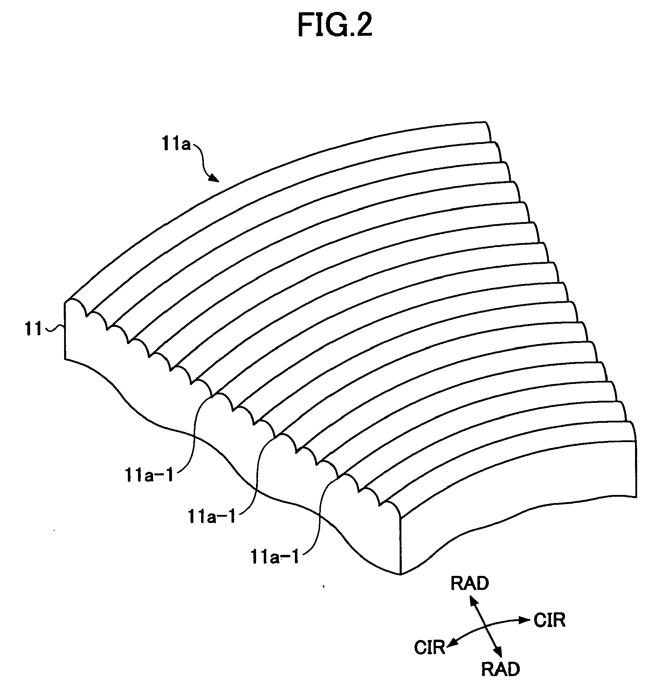

FIG. 2 is an illustration of a part of the substrate having the texture formed thereon. With reference to FIG. 2, when the substrate 11 has a disk shaped, grooves 11a-1 forming the texture 11a are formed to extend in a circumferential direction (direction of CIR shown in FIG. 2) of the disk-shaped substrate 11. The grooves 11a-1 are arranged with equal intervals in a radial direction (direction of RAD shown in FIG. 2) of the disk-shaped substrate 11. It should be noted that, in the present specification and claims, the phrase "substantially equal intervals" or "substantially predetermined intervals" encompasses, as mentioned below, a case where there is formed a local area in which the intervals of the grooves are not uniform, such as a case where adjacent grooves intersect with each other and a case where a recessed part exists over a plurality of grooves.

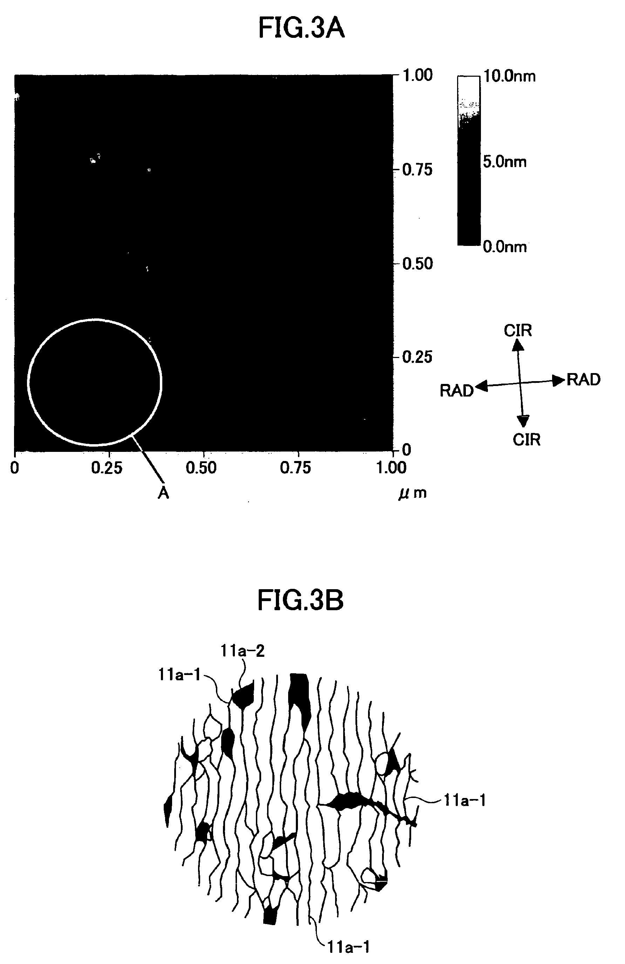

FIG. 3A is an AFM (atomic force microscope) image of the surface of the substrate on which the texture is formed. FIG. 3B is an enlarged illustration of a part A of FIG. 3A. In FIG. 3A, heights in a measured area are mapped according to a contrast based on a scale indicating a relationship between the contrast and the heights shown on upper right in the figure. Dark portions indicate low areas, that is, mainly grooves, and bright portions (or gray portions) indicate peaks (convex portions).

With reference to FIGS. 3A and 3B, the texture formed on the surface of the substrate 11 includes many grooves 11a-1 extending substantially parallel to each other in a predetermined direction (the direction CIR indicated by arrows in FIG. 3A). The grooves are formed with substantially predetermined intervals in a direction (direction RAD indicated by arrows in FIG. 3A) perpendicular to the longitudinal direction (direction CIR) of the grooves.

The grooves 11a-1 are formed to extend in substantially the same direction as a recording direction by the magnetic head (not shown in the figure). The texture 11a is formed by forming the grooves 11a-1 in an area where an ion beam is irradiated onto the surface of the substrate 11 in a predetermined direction from a texture forming apparatus mentioned later. Accordingly, the method of forming the grooves according to the present invention completely differs from a conventional method in which a single groove is formed in an irradiated area by irradiating an ion beam with a very small spot.

The grooves 11a-1 are uniformly arranged at substantially equal intervals in the RAD direction. This is an extremely different point from the conventional mechanical texture in which grooves are formed at different intervals. Since the groove 11a-1 of the texture 11a according to the present invention are uniformly arranged at substantially equal intervals, uniform internal stresses are generated in the seed layer 12 shown in FIG. 1 formed on the texture 11a. The uniform internal stresses are applied to the recording layer 18 when the recording layer 18 is deposited on the seed layer 12 via the foundation layer 13 deposited on the seed layer 12. Therefore, the orientation of the easy magnetization axis of crystal grains forming the first and second magnetic layers 15 and 17 is caused to be uniform by the application of the uniform internal stresses. Namely, when atoms and particles constituting the first and second magnetic layers 15 and 17 are deposited, the first and second magnetic layers 15 and 17 epitaxially grow along the CIR direction, which cause the easy magnetization axis to be oriented in the CIP direction. Consequently, the magnetic properties of the first and second magnetic layers 15 and 17 such as, for example, a coercive force in the RAD direction or a degree of orientation is caused to be uniform, which results in an improvement in the electromagnetic conversion characteristic such as a reduction in fluctuation of a reproduction output. It should be noted that the seed layer 12 is not formed, the texture 11a causes generation of internal stresses in the foundation layer 13.

The intervals of the grooves 11a-1 of the texture 11 are preferably selected from a value within a range from 8 nm to 33 nm. By setting the intervals of the grooves within that range, the intervals of the grooves are set to lengths equal to a size of two to three crystal grains of the recording layer 18. Thus, the thus-set intervals cause internal stresses to be efficiently generated when depositing the first and second magnetic layers 15 and 17. Consequently, a degree of orientation of the recording layer 18 in the RAD direction can be improved. Especially, when the grain diameter of the crystal grains of the recording layer 18 is about 4 nm - 8 nm, the internal stresses can be given efficiently.

Moreover, the number of the grooves 11a-1 of the texture 11 per 1 µm in the RAD direction is preferably set to a number within a range from 30 to 125. It is preferable to increase the number of grooves as the size of the crystal grains of the first and second magnetic layers 15 and 17 is reduced, and it is more preferably to set the number of grooves to a value within a range from 42 to 125. Furthermore, it is preferable to be set within a range from 42 to 83 since excellent heat resistance fluctuation can also be acquired. Although described later, the number of grooves per 1 µm in the RAD direction can be controlled by controlling an acceleration voltage of an ion gun.

It is preferable to set an average depth of the grooves to a value within a range from 0.3 nm to 5.0 nm (more preferably, 0.3 nm to 2.0 nm). If the average groove depth is smaller than 0.3 nm, a degree of orientation of the first magnetic layer 15 and the second magnetic layer 17 in the RAD direction is not sufficient. On the other hand, if the average groove depth exceeds 5.0 nm, the surface roughness of the recording medium deteriorates, which tends to cause a head crush in a magnetic storage device of a high density low floating type. It should be noted that the groove depth is defined by detecting a cross-sectional configuration in a direction perpendicular to the longitudinal direction of the grooves using an AFM and measuring a length of a line drawn from a deepest position of a valley in the cross-sectional configuration to a line connecting adjacent peaks sandwiching the valley. The average groove depth is an average of the measured depths with respect to about 40 grooves.

It should be noted that dark portions 11a-2 scatter in FIGS. 3A and 3B are fine unevenness of the substrate itself that exist before forming the texture. Additionally, if an etching process takes a long time, the area of the dark portions 11a-2 tends to increase, which may indicate that the etching is a cause of formation of the dark portions 11a-2. If the depth of dark portions 11a-2 is equal to or smaller than 5.0 nm, there is no problem since it does not cause an abnormality in an output of the magnetic recording medium.

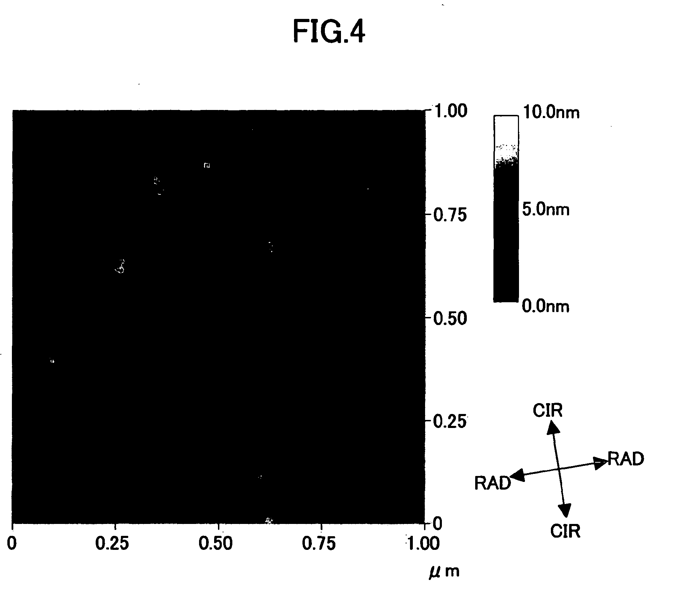

FIG. 4 is an AFM image of the surface of the substrate on which another texture is formed. FIG. 4 shows a texture that is formed by a texture forming apparatus according to the present invention in a condition different from that of the texture shown in FIG. 3. Additionally, the AFM image of FIG. 4 is measured under the same conditions as FIG. 3, and a relationship between heights of the surface of the substrate and the contrast is the same as FIG. 3.

Referring to FIG. 4, many grooves (dark portions) of the texture are formed along the CIR direction. The lengths of convex portions (bright portions) formed between adjacent grooves in the longitudinal direction of the grooves (CIR direction) are shorter than that shown in FIG. 3. In this case, although the regularity of intervals between the grooves in the RAD direction degrades, a degree of orientation of the first and second magnetic layers 15 and 17 of the magnetic recording medium formed using the texture is about 1.1, which is improved greatly as compared to a case where no texture is provided.

According to the present embodiment, the texture is formed by many grooves that extend in a direction substantially parallel to a recording direction on the surface of the substrate and arranged at substantially predetermined intervals in a direction perpendicular to the recording direction. According to the thus-formed texture, the easy magnetization axes of the crystal grains constituting the first magnetic layer and the second magnetic layer is oriented uniformly in the recording direction so as to improve a coercive force in the recording direction and a degree of orientation. Consequently, the electromagnetic conversion characteristic of the magnetic recording medium is improved, and a magnetic recording medium on which high-density recording can be performed is achieved.

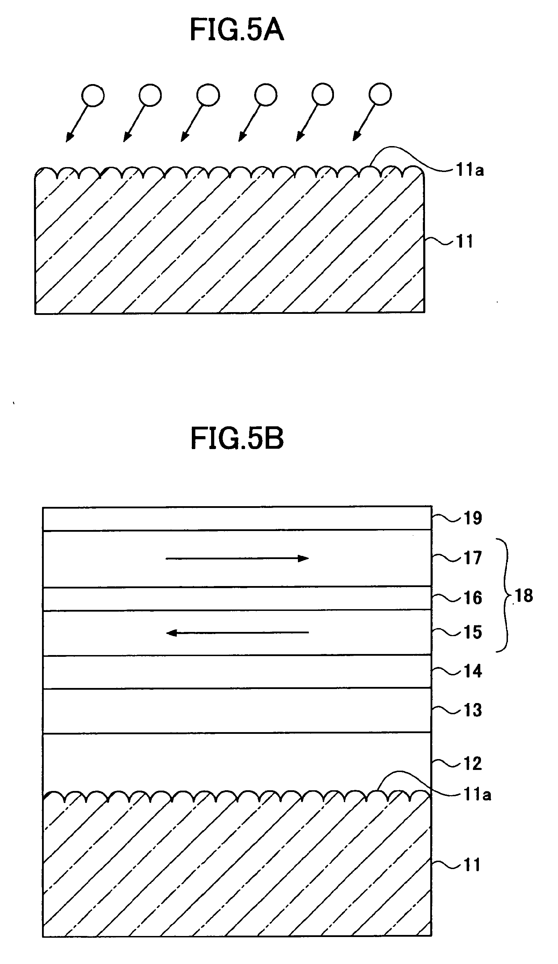

A description will now be given of a manufacturing method of the magnetic recording medium according to the first embodiment of the present invention. FIG. 5A is a cross-sectional view of a part of the substrate for explaining a manufacturing method of the magnetic recording medium according to the first embodiment of the present invention. FIG. 5B is a cross-sectional view of the magnetic recording medium according to the first embodiment of the present invention. Here, the substrate 11 is a disc-shaped substrate and description will be given of a case where a magnetic disk is manufactured using the substrate 11.

First, in a process shown in FIG. 5A, after washing and drying the surface of the substrate 11, the texture 11a is formed on the surface of the substrate 11 using a texture forming apparatus. A description will be given below of a texture forming process in detail.

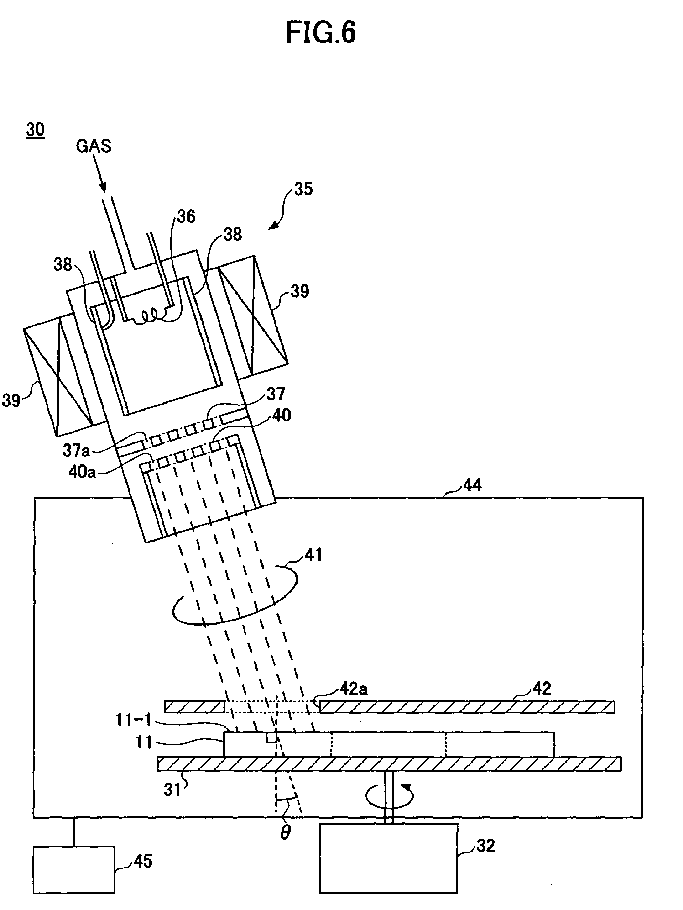

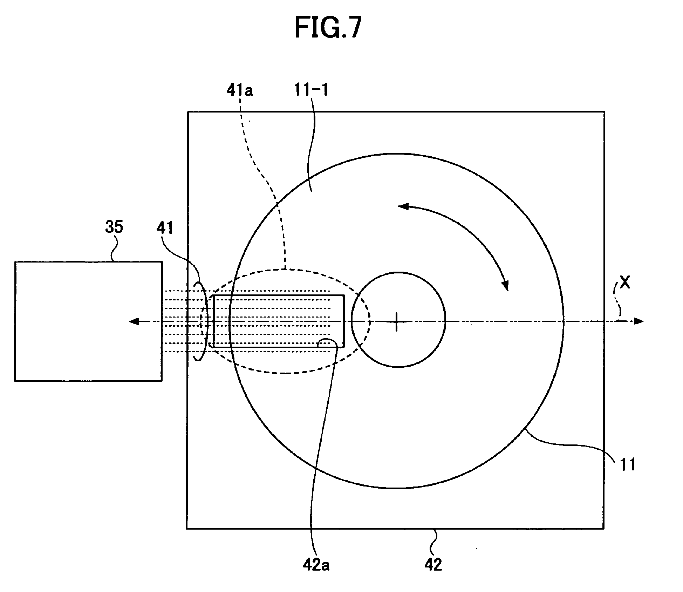

FIGS. 6 and 7 are for explaining the texture forming method performed by the texture forming apparatus. FIG. 6 is an illustration of the entire texture forming apparatus. FIG. 7 is a plan view of the texture forming apparatus.

First, with reference to FIG. 6, the texture forming apparatus 30 is provided with a substrate holding table 31 and a rotational drive part 32 in a vacuum chamber 44. The substrate 11 is placed on the substrate holding table 31. The rotational drive part 32 rotates the substrate holding table 31 about a rotational axis perpendicular to a main surface of the substrate holding table 31 so as to rotate the substrate 11 on the substrate holding table 31. Moreover, the texture forming apparatus 30 is provided with an exhaust system 45, which includes a rotary pump or a turbo molecular pump for evacuating gas in the vacuum chamber 44 and maintaining a vacuum atmosphere in the vacuum chamber 44.

There is provided above the substrate 11 an ion gun, which irradiates an ion beam onto the substrate 11. The ion gun 35 may be, for example, a Kaufman type ion gun, or may be a follow cathode type or an electron cyclotron resonance type (ECR). The Kaufman type ion gun is preferable since it has a large beam diameter which can provide an ion beam having a diameter of several centimeters to several tens centimeters. Additionally, the Kaufman type ion gun is preferable in a view point of excellent linearity of the ion beam 41.

The ion gun 35 comprises: a hot cathode 36; a cylindrical magnetron anode 38; a coil 39 which applies a magnetic field in a center axis direction of the magnetron anode 38; a shielding electrode 37; and an acceleration electrode 40 which draws and accelerates ionized gas. The shielding electrode 37 and the acceleration electrode 40 is provided with many opening parts 37a and 40a having a diameter of several hundreds micrometers. It should be noted that a power supply (not shown) is connected to each of the hot cathode 36, the magnetron anode 38 and the acceleration electrode 40. Additionally, the ion gun 35 may be provided with a neutrizer, which releases thermions into the ion beam accelerated by the acceleration electrode 40. According to the thermions, the surface 11-1 of the substrate 11, onto which the ion beam is irradiated, and a shielding plate 42 are prevented from being electrically charged.

A description will be given below of an operation of the ion gun 35. First, electrons emitted from the hot cathode 36 is confined within the cylindrical magnetron anode 38 while performing a trochoid movement. The confined electrons impact with supplied gas, which causes the gas to be ionized to generate gas ions (cations). Then, the gas ions are drawn through the opening parts 40a according to a negative acceleration voltage applied to the acceleration electrode 40, and are accelerated to form the ion beam 41. The ion beam 41 is irradiated onto the surface of the substrate 11 in a predetermined irradiating direction.

As shown in FIG. 7, the irradiating direction of the ion beam 41 is set to a radial direction of the substrate 11 (indicated by arrow X in FIG. 7). Additionally, the irradiating direction of the ion beam 41 is set in a direction slanted to a radial direction of the substrate 11 by a irradiating angle θ with respect to a direction perpendicular to the surface 11-1 of the substrate 11 as shown in FIG. 6. That is, the irradiating direction of the ion beam 41 lies in a plane formed by a radial direction (the direction X indicated in FIG. 7) of the substrate 11 and a direction perpendicular to the surface of the substrate 11 and slanted with respect to the direction perpendicular to the surface 11-1 of the substrate 11 by the irradiating angle θ. Thus, by setting the irradiating direction and irradiating the ion beam, many fine grooves are formed in a self-assembling manner on the surface 11-1 along circumferential directions, and the grooves are arranged at substantially predetermined intervals in a radial direction of the substrate 11.

Here, the self-assembling manner means that grooves having an extremely small size as compared to a size of a cross section of the ion beam are automatically formed. That is, it is not formation of an individual groove by squeezing the ion beam but formation of many grooves simultaneously in an area where the ion beam 41 is irradiated.

Here, it is preferable to set the irradiating angle θ of the ion beam 41 to an angle within a range from 45 degrees to 70 degrees. If the irradiating angle θ is smaller than 45 degrees or exceeds 70 degrees, it is difficult to form grooves having a sufficient depth. The irradiating angle θ is more preferably set to an angle within a range from 55 degrees to 65 degrees in a view point of formation of deeper grooves.

As the gas used for the ion beam 41, there are inert gases such as Ar, Kr, Xe, etc., and at least two kinds of those gases may be used by being mixed with each other. The gas used for the ion beam is preferably Kr and Xe in respect of good uniformity of the grooves formed and formation of deep grooves efficiently.

It is preferable to set an amount of gas to be supplied to the ion gun 35 to, for example, a value within a range from 2 sccm to 20 sccm. Moreover, it is preferable to set the acceleration voltage of the ion beam (a voltage applied to the acceleration electrode 40 of FIG. 6) to a value within a range from 0.4 kV to 1.0 kV. Moreover, the intervals between the grooves decrease as the acceleration voltage decreases, and the number of grooves per unit length in a direction perpendicular to the longitudinal direction of the grooves tends to increase. Accordingly, by appropriately selecting the acceleration voltage in accordance with the average grain size of the crystal grains of the recording layer, an appropriate degree of orientation of the recording layer in a circumferential direction can be acquired. Moreover, although an ion beam current is suitably selected in relation with a process time, it is preferable to set to a value within a range from 10 mA to 500 mA.

Moreover, the substrate may be rotated by the rotational drive part 32 while irradiating the ion beam 41 by the ion gun 35 as shown in FIG. 6. The substrate 11 may be rotated in either of rotational directions about the center axis that passes the center of the substrate 11 and perpendicular to the surface of the substrate 11, or may be rotated alternately in both rotational directions. A rotating speed is set, for example, to about 15 revolutions/minutes. It should be noted that, although illustration is omitted, a plurality of ion guns may be provided to the texture forming apparatus so as to irradiate the entire surface of the substrate 11 simultaneously to form the texture. In such a case, the substrate 11 may be rotated or may not be rotated.

Moreover, as shown in FIG. 7, the ion gun 35 may be arranged on the outer periphery side of the substrate 11 so as to irradiate the ion beam 41 toward the inner periphery side of the substrate 11. On the other hand, although illustration is omitted, the ion gun 35 may be arranged on the inner periphery side of the substrate 11 so as to irradiate the ion beam 41 toward the outer periphery side of the substrate 11.

Moreover, in order to limit the range to which the ion beam 41 is irradiated onto the substrate 11, the shielding plate 42 may be provided between the acceleration electrode 40 for the ion beam and the substrate 11. As for an opening 42a of the shielding plate 42, it is preferable to configure as an elongated slit along a radial direction of the substrate 11. Thus, by providing the opening 42a, the irradiation range of the ion beam 41, which tends to spread in a circumferential direction of the substrate 11, is limited. Therefore, by limiting the irradiation range in the circumferential direction, grooves are formed along the circumferential direction, which results in grooves having less deviation from a circumferential direction. According to the texture having the above-mentioned grooves, a degree of orientation of the recording layer in a circumferential direction can be improved.

When using the shielding plate 42 having the opening part 42a, the ion beam 41 is irradiated onto the substrate 11 while rotating the substrate 11 as mentioned above.

Moreover, although the opening part 42a of the shielding plate 42 may have a shape of slit and widened toward outer periphery side of the substrate 11. Thus, by providing the opening part 42a to the shielding plate 42, amounts of ion beam irradiated onto unit area on the inner periphery side and the outer periphery side of the substrate 11 can be set substantially equal to each other. Consequently, the groove having a uniform groove depth can be formed on both the inner periphery side and the outer periphery side. That is, since the linear velocity of the substrate 11 increases as it goes toward the outer periphery side when the substrate 11 is rotated and if the widths of the opening part 42a are the same between the outer periphery side and the inner periphery side, an amount of irradiated ion beam per unit area is decreased. Thus, an amount of irradiated ion beam per unit area is increased by increasing the width of the opening part 42a on the outer periphery side than the width of the opening part 42a on the inner periphery side so as to equalize the amount of irradiated ion beam per unit area. It should be noted that if the width of the opening part 42a on the outer periphery side is enlarged excessively, deviation of the grooves from a circumferential direction is increased as mentioned above, the widths of the opening part 42a is appropriately selected in consideration of a difference in a degree of orientation of the recording layer in the circumferential direction between the inner periphery side and the outer periphery side of the recording layer.

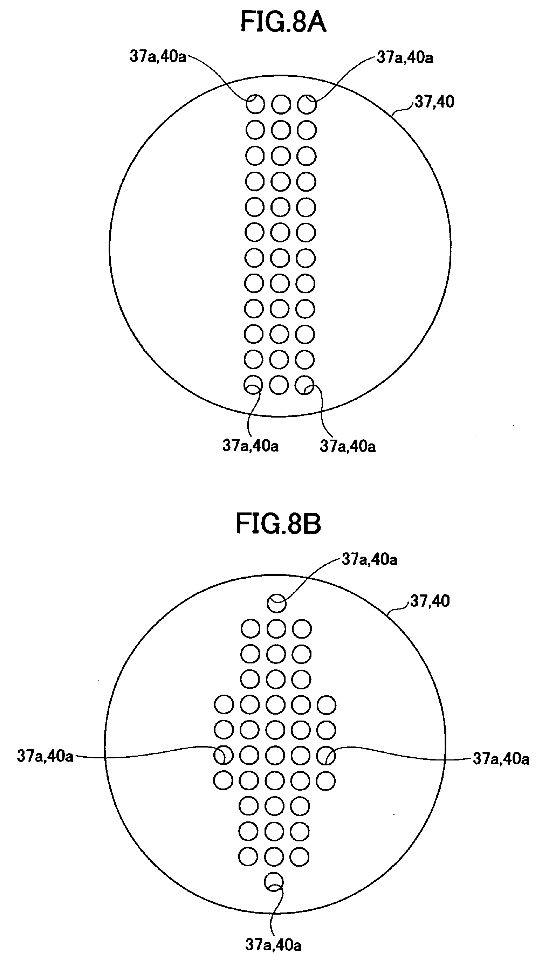

FIGS. 8A and 8B are plan views of examples of the shielding electrode and the acceleration electrode of the ion gun.

With reference to FIG. 8A, openings 37a and 40a are formed in elongated rectangular areas of the shielding electrode 37 and the acceleration electrode 40 of the ion gun 35, respectively. Since gas ions are drawn through the openings 37a and 40a, the cross-section of the ion beam is formed in an elongated rectangular shape corresponding to the elongated rectangular area of the shielding electrode 37 and the acceleration electrode 40. By causing the longitudinal direction of the ion beam to match a radial direction of the substrate 11, an area 41a in which the ion beam 41 is irradiated onto the shielding plate 42 is reduced, which suppresses generation of fine particles from the shielding plate 42 due to the irradiation of the ion beam. Moreover, wear of the shielding plate 42 due to the irradiation of ion beam can also be suppressed.

Moreover, the ion beam may be irradiated in a predetermined range on the surface of the substrate 11 without providing the shielding plate 42 by shaping the ion beam by the opening parts 37a and 40a.

With reference to FIG. 8B, the opening parts 37a and 40a are arranged in an elongated elliptic area on the shielding electrode 37 and the acceleration electrode 40 of the ion gun 35, respectively. In this case, since an ion beam is shaped in an elongated elliptic shape, an effect the same as the example shown in FIG. 8A can be acquired.

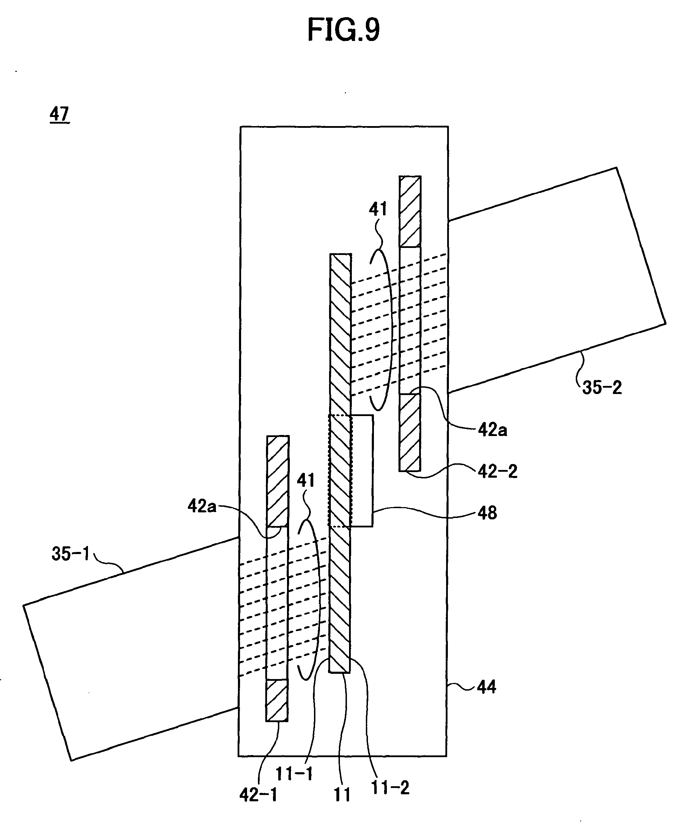

FIG. 9 is an illustration of another example of the texture forming apparatus. It should be noted that, in FIG. 9, an exhaust system and a rotational drive part are omitted for the sake of simplification of the drawing.

Referring to FIG. 9, the texture forming apparatus 47 comprises: a substrate holding member 48 which holds and rotates the substrate 11; ion guns 35-1 and 35-2 arranged to face the surfaces 11-1 and 11-2 of the substrate 11, respectively; and shielding plates 42-1 and 42-2 having openings 42a and provided between the ion guns 35-1 and 35-2 and the surface 11-1 and 11-2, respectively.

The texture forming apparatus 47 can form textures on both sides of the substrate 11 simultaneously since the ion guns 35-1 and 35-2 are provided to the respective surfaces 11-1 and 11-2 of the substrate 11.

It should be noted that various variations and modification may be made for the structure of the texture forming apparatus 47 that forms textures simultaneously on both sides of the substrate. Although illustration is omitted, the ion guns may be arranged in a direction from an inner side to an outer side of the substrate. Moreover, the ion guns may be arranged substantially perpendicular to isolation walls of the vacuum chamber 44 and the substrate may be arranged to lie in a plane so that the ion beams are irradiated in predetermined irradiating directions, respectively.

Returning to FIG. 5B, the surface of the substrate 11 on which the texture 11a is formed is subjected to wet-washing such as scrub-washing using pure water or a surfactant and pure water in the process shown in FIG. 5B. By performing the wet-washing, fine particles or the like of the material of the substrate generated in the texture forming process are removed from the surface of the substrate 11. Consequently, generation of protrusions on the surface of the magnetic recording medium due to fine particles after the formation of the magnetic recording medium can be prevented. Ultrasonic-cleaning may be performed instead of the scrub-washing, or the scrub-washing and the ultrasonic-cleaning may be combined. Instead, other known cleaning method may be use. It should be noted that a known dry cleaning may be used instead of the we-washing in accordance with a degree of adhesion of fine particles of the substrate material or the like.

In the process of FIG. 5B, further, the substrate is placed in the chamber and heat the substrate 11 at about 180°C using, for example, a PBN (pyrolytically-decomposed boron nitride) heater within a vacuum atmosphere. The chamber is temporarily evacuated to a vacuum below 10⁻⁵ Pa, and, then, Ar gas is supplied so that the pressure inside the chamber becomes 0.67 Pa.

In the process of FIG. 5B, further, the seed layer 12, the foundation layer 13, the nonmagnetic intermediate layer 14, the first magnetic layer 15, the nonmagnetic coupling layer 16 and the second magnetic layer 17 are sequentially formed by a sputtering method on the surface of the substrate on which the texture 11a is formed. Specifically, these layers 12 through 17 are formed by a DC magnetron method by temporarily evacuating the chamber to a vacuum of below 10⁻⁵ Pc and then making an Ar gas atmosphere of a pressure of 0.67 Pa in the chamber. It should be noted that the substrate 11 may be heated again before forming the nonmagnetic coupling layer 16 or the second magnetic layer 17. The heating temperature is preferably set to a temperature equal to or lower than 270°C, and more preferably set to a temperature within a range from 200°C to 240°C.

In the process of FIG. 5B, further, the protective film 19, such as a diamond-like carbon of a thickness of 2 nm, is formed on the second magnetic layer 17 by a sputtering method, a chemical vapor deposition (CVD) method, a filtered cathode arc (FCA) method or the like. It should be noted that the process from the substrate heating process to the protective film forming process of FIG. 5B is performed in the chamber, and each process is preferably performed without being exposed to an atmosphere also during transportation.

In the process of FIG. 5B, further, the lubrication layer 20 having a thickness of, for example, 1.5 nm is formed by an immersing method (a lifting method, a liquid level lowering method), a spin coating method, a vapor injecting method, etc., using an application liquid prepared by diluting the above-mentioned lubricant by an organic solvent. By the above-mentioned process, the magnetic recording medium according to the present embodiment is manufactured.

According to the manufacturing method according to the present embodiment, the texture consisting of many grooves extending in a circumferential direction of the magnetic disk and arranged at predetermined intervals in a radial direction can be formed by irradiating an ion beam onto the substrate surface in a predetermined direction using the texture forming apparatus. Additionally, according to the manufacturing method according to the present embodiment, the texture can be formed easily in a much shorter time than the conventional technique in which a converged ion beam is irradiated since the texture consisting of may grooves is formed in a self-assembling manner by irradiating an ion beam onto the substrate surface over an inner side to an outer side of the substrate. Consequently, the processing cost of the texture can be reduced greatly, as a result a manufacturing cost of the magnetic recording medium can be reduced.

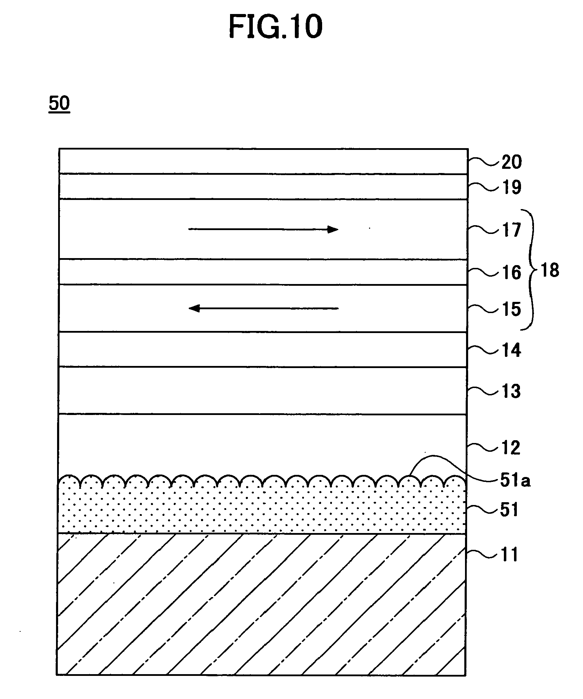

FIG. 10 is a cross-sectional view of a variation of the magnetic recording medium according to the first embodiment of the present invention. In FIG. 10, parts that are described above are given the same reference numerals, and description thereof will be omitted.

With reference to FIG. 10, the magnetic recording medium 50 according to the variation of the first embodiment comprises the substrate 11, a texture layer 51 on which a texture is formed, the seed layer 12, the foundation layer 13, the nonmagnetic intermediate layer 14, the first magnetic layer 15, the nonmagnetic coupling layer 16, the second magnetic layer 17, the protective film 19 and the lubrication layer 20 that are sequentially formed in that order on the substrate 11. The magnetic recording medium 50 according to the variation of the first embodiment has the same structure as the magnetic recording medium 10 except for the texture 51a formed on a surface of the texture layer 51. It should be noted that although a surface of each of the seed layer 12 through the protective film 19 has unevenness due to the grooves of the texture 11a, illustration of the unevenness is omitted for the sake of convenience of explanation.

The texture layer 51 is formed of, for example, a dielectric film having a thickness of 5 nm to 100 nm. As for a material of the dielectric film, there are an oxide, nitride and carbide of a metal element, a glass material, a ceramics material and the like. More specifically, silicon dioxide, silicon nitride, silicon carbide, etc., may be used.

The manufacture method of the magnetic recording medium 50 of the present variation comprises: a process of forming the texture layer 51 after washing and drying the substrate 11; a process of forming the texture 51a on the surface of the texture layer 51, and a process of forming the seed layer 12 through the lubrication layer 20 in the same manner as that explained with reference to FIG. 5B in the above-mentioned first embodiment.

The texture layer 51 is formed of the above-mentioned material using a sputtering method, a vacuum vapor deposition method, a CVD method, an electro-plating method, an electroless plating method, etc. Subsequently, the texture 51a is formed on the surface of the texture layer 51 using the texture forming apparatus 30 or 47 shown in FIG. 6 or FIG. 9. The method of forming the texture 51a is the same as the process shown in FIG. 5A in the first embodiment, and a description thereof will be omitted.

According to the present variation, since the texture layer 51 is formed of a material more homogenous than a glass substrate, for example, the texture 51a formed by irradiation of an ion beam has an higher uniformity than that formed on the substrate 11 and a distribution width of groove depths can be reduced. Therefore, a degree of orientation of the recording layer 18 of the magnetic recording medium in the recording direction can be further improved while reducing a surface roughness of the magnetic recording medium. Consequently, the electromagnetic conversion characteristic of the magnetic recording medium 50 is improved, and a magnetic recording medium capable of being recorded with a high recording density is achieved.

A description will be given of examples of the structure of the magnetic recording medium according to the first embodiment.

### (Example 1)

A disk-shaped glass substrate of which surface having an outer diameter of 65 mm of which surfaces are washed and dried was placed on the substrate holding table in the vacuum chamber of the texture forming apparatus. After a vacuum of 6.5x 10⁻⁴ Pa was formed in the vacuum chamber, Ar gas was introduced into the chamber and the pressure inside the chamber was maintained at a vacuum of 3.3×10⁻² Pa. Ar gas was introduced into the ion gun and the acceleration voltage of the ion beam of the ion gun was set to 1 kV and an ion beam current was set to 500 mA, and the process time was set to 120 seconds. Irradiation of an ion beam onto the glass substrate was performed while changing an angle (irradiating angle) formed between a direction perpendicular to the substrate from an outer side in a radial direction and an irradiating direction to 0, 30, 45, 60 and 75 degrees.

A magnetic disk mentioned below was manufactured using a DC magnetron sputtering apparatus by using the glass substrate having the thus-formed texture thereon.

The texture formation glass substrate (a diameter of 65 mm) / the seed layer: Ru₅₀Al₅₀ film (10 nm) / the foundation layer: Cr film (4.5 nm) /the first magnetic layer: Co₉₀Cr₁₀ film (2 nm) / the nonmagnetic coupling layer: Ru film (0.7 nm) / the second magnetic layer: CoCrPt₁₂B₇Cu₄ film (15 nm) / the protective film: the carbon film (4.5 nm).

It should be noted that the numerical values in parentheses represent film thicknesses, and the numerical values of composition are expressed in atomic percentage (%).

Each of the above-mentioned layers was formed under the following conditions. Before forming the Ru₅₀Al₅₀ film, the glass substrate was heated at 180°C in a vacuum using a PBN heater. The Ru₅₀Al₅₀ film through the Co₉₀Cr₁₀ film were sequentially formed within Ar gas atmosphere (pressure of 0.67 Pa) using DC magnetron spatter apparatus. Before forming the Ru film, the formed films were heated at 230°C using the PBN heater. Then, the Ru film through the carbon film were formed by a sputtering method within an Ar gas atmosphere (pressure of 0.67 Pa).

### (Example 2)

The magnetic disk was fabricated in the same manner as the example 1 except for formation of a texture by supplying Kr gas to the ion gun and setting the ion beam current to 250 mA.

### (Example 3)

The magnetic disk was fabricated in the same manner as the example 1 except for formation of a texture by supplying Xe gas to the ion gun and setting the ion beam current to 250 mA.

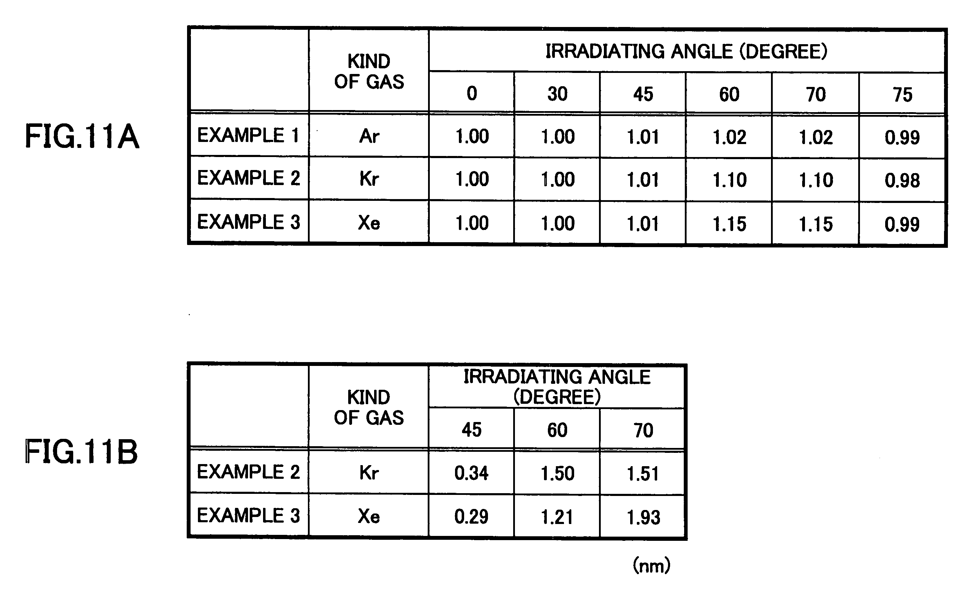

FIG. 11A is an illustration for explaining a degree of orientation of the recording layer in a circumferential direction of the examples 1 through 3. FIG. 11B is an illustration for explaining an average groove depth of the surface of the substrate provided with the texture formed thereon. Here, a degree of orientation of the recording layer in a circumferential direction is defined as Hcc/Hcr here the coercive force Hcc in a circumferential direction of the magnetic disk and the coercive force Hcr in a radial direction of the magnetic disk were obtained from a hysteresis loop measured using a magnetic Kerr effect measuring device by applying a magnetic field in a circumferential direction and a radial direction using an oscillation sample type magnetometer. When a degree of orientation of the recording layer in a circumferential direction is 1.00, this indicates that the easy magnetization axis (c axis) of the first magnetic layer and the second magnetic layer that constitute the recording layer is oriented isotropically in a plane of each of the magnetic layers, also indicates that the orientation of the easy magnetization axis in a circumferential direction is more promoted as the degree of orientation of the recording layer in a circumferential direction is increased.

It should be noted that the depth of the grooves is obtained by obtaining a cross-sectional configuration of the grooves in a direction perpendicular to the longitudinal direction of the grooves using an AFM and measuring a length of a line drawn from a deepest position of a valley in the cross-sectional configuration to a line connecting adjacent peaks sandwiching the valley. The average groove depth is an average of the measured depths with respect to about 40 grooves. The numerical values in FIG. 11B are expressed in unit of nm.

Referring to FIG. 11A, in the example 1 through example 3, conditions according to which a degree of orientation of the recording layer in a circumferential direction exceeds 1.00 is a range of the slanting angle from 45 degrees to 70 degrees. Moreover, it is appreciated that a degree of orientation of the recording layer in a circumferential direction increased from the example 1 to the example 2 and further from the example 2 to the example 3. That is, it is appreciated that a degree of orientation of the recording layer in a circumferential direction is higher as an atomic mass of the gas changing to the ion beam is larger.

Referring to FIG. 11B, considering the average groove depth of the substrate surface in the example 2 and the example 3, it is appreciated that a degree of orientation of the recording layer is higher as the average groove depth is larger.

### (Comparative Example 1)

For comparison of the texture, a texture was formed on a surface of a disk-shaped glass substrate the same as that of the example 1 using a texture forming apparatus, which forms a mechanical structure. As a condition of forming the mechanical texture, a diamond slurry of an average particle diameter of 0.1 µm was supplied to a pad that was pressed against the surface of the substrate while rotating the substrate so as to form the mechanical structure.

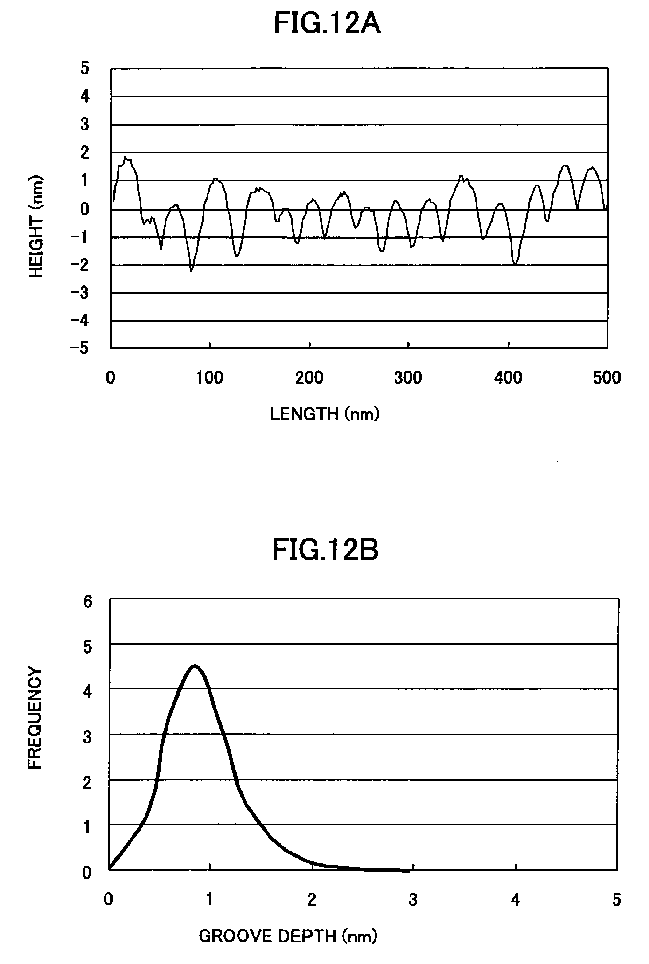

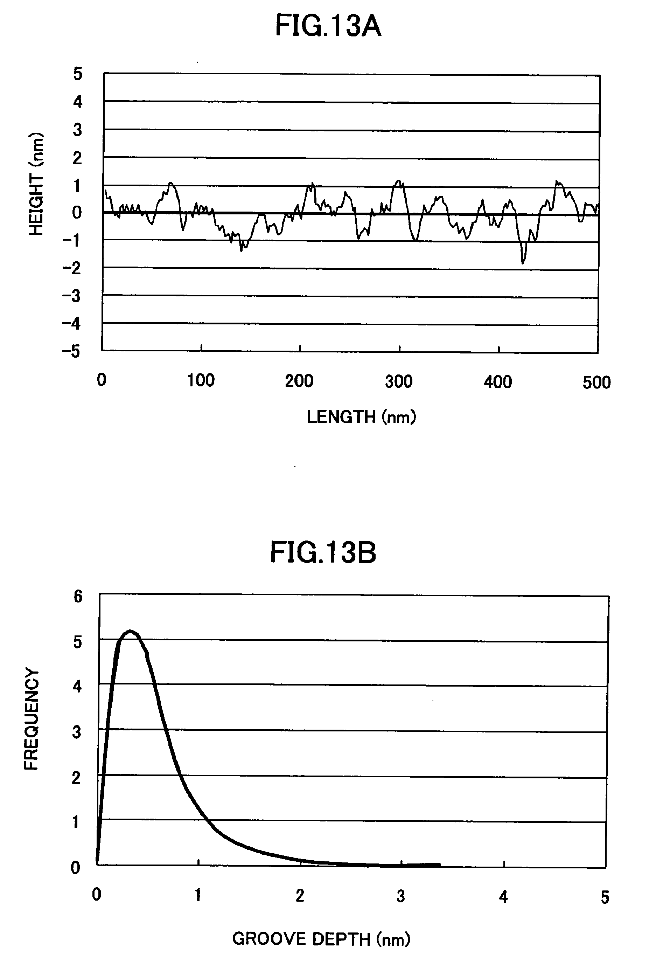

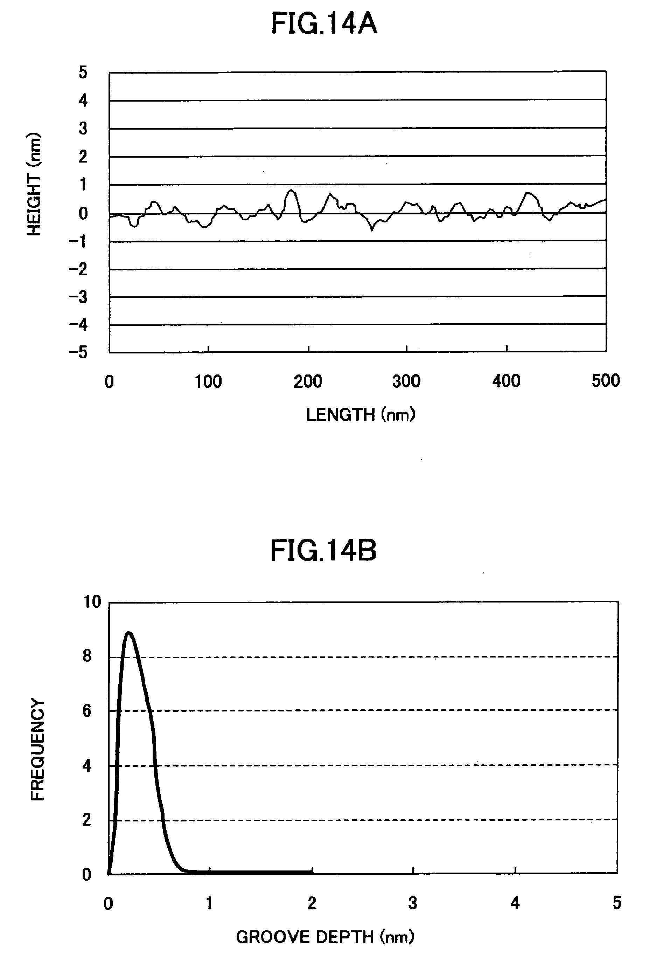

FIG. 12A is a graph showing a cross-sectional configuration of the substrate surface in the example 3 (irradiating angle of 60 degrees). FIG. 12B is a graph showing a distribution of groove depths of the substrate surface in the example 3 (irradiating angle of 60 degrees). FIG. 13A is a graph showing a cross-sectional configuration of the substrate surface in the comparative example 1. FIG. 13B is a graph showing a distribution of groove depths of the substrate surface in the comparative example 1. FIG. 14A is a graph showing a cross-sectional configuration of the surface of the glass substrate before a texture is formed. FIG. 14B is a graph showing a distribution of groove depths of the substrate surface before a texture is formed. Hereinafter, the example 3 (irradiating angle of 60 degrees) means the substrate on which a texture has been formed by setting an irradiating angle to 60 degrees in the above-mentioned example 3, and may be referred to as example 3-60 for the sake of convenience.

FIG. 12A and FIG. 13A show cross-sectional configurations measured in a direction perpendicular to the longitudinal direction of the grooves by an AFM apparatus. FIG. 14A shows a cross-sectional configuration measured in an arbitrary direction. FIG. 12B, FIG. 13B and FIG. 14B represent histograms of grooves having groove depths (corresponding to the horizontal axis of the graph) measured in the cross-sectional configurations shown in FIG. 12A, FIG. 13A and FIG. 14A, respectively.

Referring to FIG. 12A and FIG. 13A, the mechanical texture of the comparative example 1 has a large wave and a small wave of the cross-sectional configuration with respect to amplitude and period mixed together, and, thus, there is less periodicity and intervals between the grooves are not uniform, while the grooves and peaks in the cross-sectional configuration of the texture of the example 3-60 are formed periodically and the grooves are arranged at substantially uniform intervals. Additionally, is can be appreciated that the depths of the grooves of the example 3-60 are substantially uniform.

Referring to FIG. 12B and FIG. 13B, the histogram of the mechanical texture of the comparative example 1 shown in FIG. 13B has an extended skirt part on the deep side of the groove depth. That is, in the comparative example 1, many grooves having larger depths than the groove depth at the peak position are formed, which results in a large distribution width of the groove depths when setting the groove depth at the peak position as a reference.

On the other hand, as shown in FIG. 12B, the skirt part of the histogram of the groove depths of the texture of the example 3-60 is the same as that of the comparative example 1. The groove depth at the peak position of the example 3-60 is larger than the groove depth at the peak position of the comparison example. Accordingly, a distance from the peak position to the end of skirt part on the deeper side of the grooves of the example 3-60 is shorter than that of the comparative example 1. Namely, it is appreciated that the texture of the example 3-60 has grooves having depths that are more uniform than that of the comparative example 1. Moreover, since the symmetry with respect to the peak of the example 3-60 is excellent, uniform internal stresses may be caused by the texture.

Referring to FIG. 12A and FIG. 14A, it is appreciated that the grooves and peaks in the cross-sectional configuration of the example 3-60 are formed periodically as compared to that of the substrate surface before forming the texture of the reference example. Further, referring to FIG. 12B and FIG. 14B, it is appreciated that grooves having uniform depth are formed in the example 3-60 as compared to that of the substrate surface before forming the texture of the reference example.

### (Example 4)

A magnetic disk was formed in the same manner as the example 1 except for introducing Xe gas into the ion gun, setting the acceleration voltage of the ion beam of the ion gun to 0.5 kV, setting an ion beam current to 250 mA, setting a process time to 109 seconds, and setting an angle formed between a direction perpendicular to the substrate and an irradiating direction of the ion beam onto the glass substrate to 60 degrees.

The image shown in FIG. 3A is an AMF image of the substrate surface on which the texture of the example 4 is formed. With reference to FIG. 3A, grooves are formed at intervals of about 18 nm in the RAD direction. The number of grooves is 55 per µm. On the other hand, the grooves of the texture formed on the substrate surface of the example 1 are arranged at intervals of about 27 nm in the RAD direction, and the number of grooves is 37 per µm.

In the example 1, the acceleration voltage of the ion beam is 1 kV, while the acceleration voltage of the example 4 is 0.5 kV. Therefore, according to the example 1 and the example 4, the interval of the grooves can be reduced by reducing the acceleration voltage, which results in an increase in the number of grooves per unit length. Consequently, when the particle diameter of the crystal grains the recording layer is reduced, a degree of orientation of the recording layer in a circumferential direction can be increased by forming a texture with a reduced acceleration voltage.

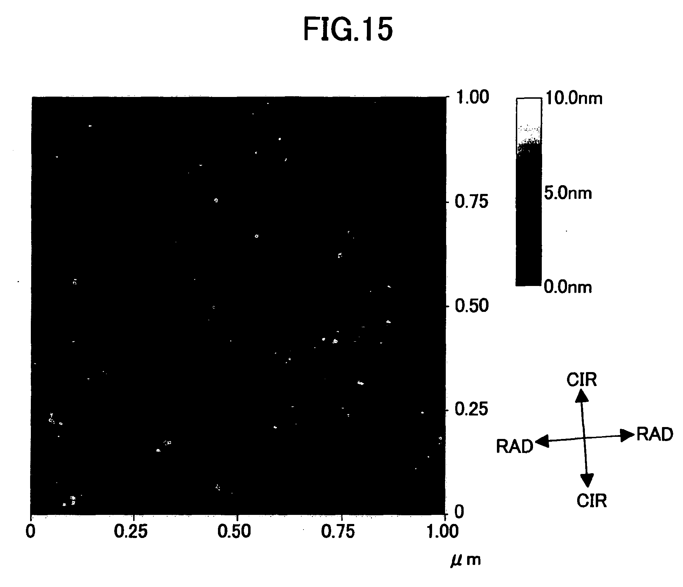

FIG. 15 is an AFM image of the surface of the magnetic disk of the example 4. The AFM image of FIG. 15 is measured on with the same conditions as that shown in FIG. 3, and a relationship between height of the substrate surface and a contrast is the same as that of FIG. 3.

With reference to FIG. 15, a plurality of grooves extending in the CIR direction are recognized on the surface of the magnetic disk of the example 4, that is, in a part of the surface of the protective film. This indicates that the unevenness of the texture formed on the substrate surface shown in FIG. 3 is taken over to the Ru₅₀Al₅₀ film and further to the carbon film.

### (Example 5)

A disk-shaped glass substrate having an outer diameter of 65 mm of which surface was washed and dried was placed on a substrate holding table in a vacuum chamber of a texture forming apparatus, and after evacuating the vacuum chamber to 6.5×10, Ar gas was introduced into the vacuum chamber and the pressure in the vacuum chamber was maintained at a vacuum of 3.3×10⁻² Pa. Then, Xe gas was introduced into an ion gun and an accelerating voltage of the ion beam of the ion gun was set to 1.0 kV, 0.5 kV and 0.3 kV. The ion beam current was set to 250 mA and a process time was set to 111 to 120 seconds. Moreover, irradiation of the ion beam onto the glass substrate was performed while setting an angle (irradiation angle) between the direction of irradiation and a direction perpendicular to the substrate from an outer side in a radial direction was set to 60 degrees.

Each of the thus-obtained three kinds of texture-formed glass substrate was subjected to scrub-washing. Then, magnetic disks having the following structure were produced by a DC magnetron sputter device by using the texture-formed glass substrates.

The texture formed glass substrate (diameter of 65 mm) / a seed layer: Ru₅₀Al₅₀ film (10 nm) / a ground layer: Cr film (5.0 nm), Cr₇₅Mo₂₅ film (2 nm) / a first magnetic layer: Co₉₀Cr₁₀ film (2 nm) / non-magnetic coupling layer: Ru film (0.7 nm) / a second magnetic layer: CoCr₁₈Pt₁₁B₈Cu₃ film (15 nm) /a protection film: carbon film (4.0 nm)

It should be noted that each number in parenthesis represent film thickness, and each number of the composition is represented by atomic %.

Each layer of the above-mentioned magnetic disks was formed as follows. After evacuating a film-forming chamber of the DC magnetron sputter device to 1.0×10⁻⁵ Pa, Ar gas was introduced and the glass substrate was heated at 180°C in an Ar gas atmosphere (pressure of 0.67 Pa) using a PBN heater. Subsequently, each film from the Ru₅₀Al₅₀ film to the Co₉₀Cr₁₀ film was formed sequentially. Subsequently, it was heated at 240°C in the vacuum using the PBN heater again, and, subsequently, the Ru film, the CoCr₁₈Pt₁₁B₈Cu₃ film, and the carbon film were formed in an Ar gas atmosphere (pressure of 0.67 Pa) using the DC magnetron sputter device. It should be noted that the magnetic disks using the texture-formed substrates by setting the acceleration voltage of the ion beam to 1.0 kV, 0.5 kV and 0.3 kV are referred to as examples 5-1, 5-2 and 5-3, respectively.

For the sake of comparison, a magnetic disk was produced, similar to the embodiment 5, using a substrate on which the mechanical texture of the above-mentioned example 1 is formed. Hereafter, this magnetic disk is referred to as comparative example 2.

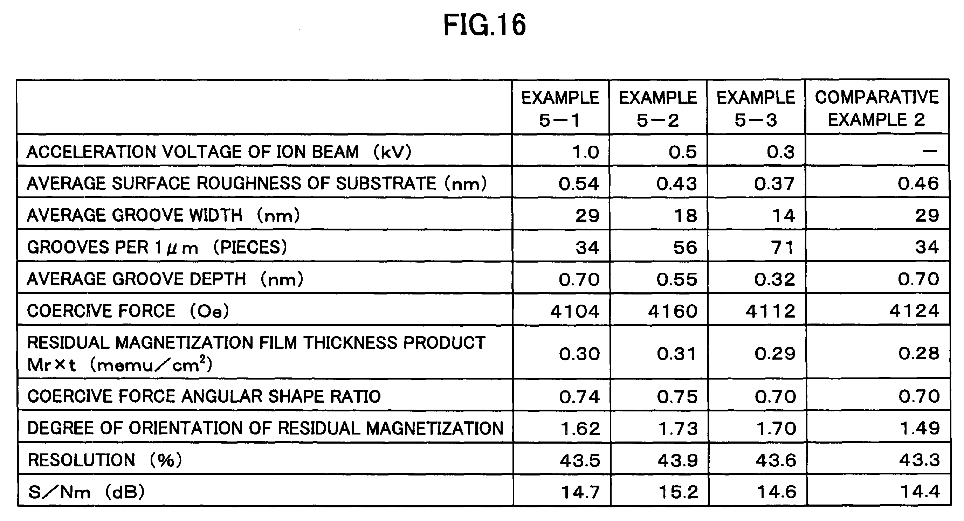

FIG. 16 is a diagram showing the texture forming conditions, the textures and the characteristic of the magnetic disks of the examples 5-1, 5-2 and 5-3 and the comparative example 2. The coercive force, the residual magnetization film product and the coercive force angular shape ratio are characteristics measured along a longitudinal direction of the texture, that is, along a circumferential direction. It should be noted that the residual magnetization film product corresponds to a difference (Mᵣ₂xt₂-Mr₁xt₁) between Mᵣ₂xt₂ and Mᵣ₁xt₁, where Mᵣ₂ and t₂ are the residual magnetization and the film thickness of the Co₉₀Cr₁₀ film and Mᵣ₁ and t₁ are the residual magnetization and the film thickness of the CoCr18Pt11B8Cu3 film. The residual magnetization orientation degree was obtained by measuring the residual magnetization in a circumferential direction and a radial direction of the magnetic disk by a vibration sample type magnetometer (VSM) and according to a relationship (residual magnetization orientation degree = residual magnetization in a circumferential direction / residual magnetization in a radial direction).

Referring to FIG. 16, according to the examples 15-1 through 15-3, the average surface roughness of the texture formed decreased and the average groove depth decreased as the acceleration voltage of the ion beam was decreased. Additionally, the average groove width decreased and the number of grooves per 1 micron increased as the acceleration voltage of the ion beam is decreased.

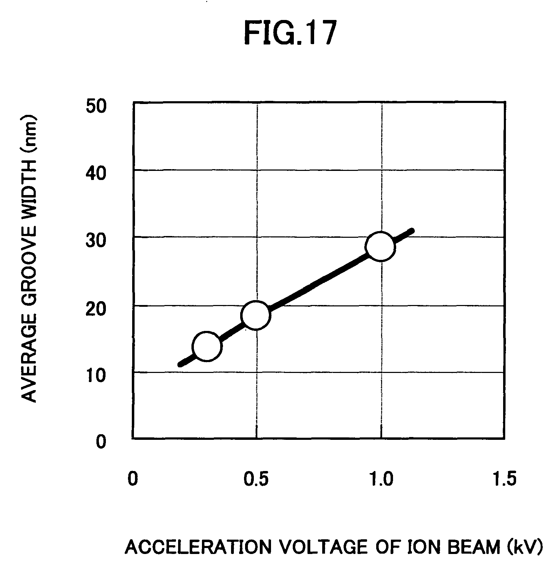

FIG. 17 is a graph showing a relationship between the average groove width and the acceleration voltage of the ion beam of the textures in the examples 5-1 through 5-3. Referring to FIG. 17, it is appreciated that the acceleration voltage of the ion beam and the average groove width of the texture has an excellent negative correlation.

Accordingly, it can be appreciated that the surface characteristic of the texture can be controlled by the acceleration voltage of the ion beam, and the groove width of the texture can also be controlled with high accuracy.

Further, returning to FIG. 16 and comparing the examples 5-1 through 5-3 with the comparative example 2, it can be appreciated that the texture by the ion beam can form a groove having smaller width than that of the mechanical texture. In the case of the mechanical texture, fine abrasives must be used to form a fine texture. However, it was difficult to maintain the dispersion of the abrasives well for a long time during manufacturing. Thus, it was difficult to form a fine mechanical texture with good manufacturing stability. Additionally, in order to adjust the groove depth and groove width of the mechanical texture, it was needed to select from among various materials of an average particle diameter and a particle diameter distribution. Additionally, it was needed to perform a complicated control of a dispersion device for maintaining dispersion of the abrasive particles when forming a texture. On the contrary, the texture formation according to the ion beam of the present invention is capable of forming a fine texture extremely easily, and a controllability of the texture configuration is good. Thus, the texture formation according to the ion beam has an advantage in that the manufacturing stability can also be attained easier than the conventional mechanical texture.

With respect top the magnetic characteristic and electromagnetic transformation characteristic of the magnetic disk, the examples 5-1 and 5-2 have a higher degree of orientation of residual magnetization and a higher coercive force angular shape ratio than that of the comparative example 2 and also have a higher resolution and a higher S/Nm. The example 5-1 has a surface configuration characteristic of the texture almost the same as the comparative example 2, but attains a magnetic characteristic and an electromagnetic transformation characteristic better than that of the comparative example 2. It is considered that this is caused by a microscopic configuration, that is, for example, a shape of each groove and a configuration of a convex portion between the grooves are different between the texture according to the ion beam and the mechanical texture.

Additionally, comparing the examples 5-1 through 5-3, the examples 5-1 and 5-2 have the higher magnetic characteristic (the degree of orientation of residual magnetization and the coercive force angular shape ratio) and the higher electromagnetic transformation (the resolution and S/Nm) than that of the example 5-3. The reason for this is considered as follows.

Murao et al (Japanese applied society report, Vol. 25, p.p. 616-618 (2002)) reports that when an average particle diameter of a Cr film is reduced to one half of a width of a groove of a texture, in other words, if the width of the groove is greater than twice the average garain diameter of the Cr film, a distortion occurs in the crystal lattice, and the distortion causes an easy magnetization axis of a magnetic layer to orient in a circumferential direction.

When the diameter of the crystal grain of the CoCr18Pt11B8Cu3 film of the magnetic disk of the embodiment 5-2 was measured by a transmission electron microscope, the average diameter of 143 crystal grains was 7.62 nm (average value of the grain diameter of the 143 crystal grains). It is considered that the Cr film, which is the foundation of the CoCr18Pt11B8Cu3 film, has almost the same average grain diameter as the CoCr18Pt11B8Cu3 film.

Moreover, the average groove widths of the textures of the examples 5-1 and 5-2 are 29 nm and 18 nm, respectively, and are more than twice the average grain diameter. On the other hand, the average groove width of the texture of the embodiment 5-3 is 14 nm, which is smaller than twice the average grain diameter. According to the same action in the above-mentioned report, the average groove widths of the textures of the examples 5-1 and 5-2, which are greater tan the average grain diameter of the Cr film, have better orientation of the easy magnetization axis than that of the example 5-3 of which average groove width of the texture is smaller tan the average grain diameter of the Cr film. Thus, it is considered that the examples 5-1 and 5-2 have the magnetic characteristic and the electromagnetic transformation characteristic superior to the example 5-3. Accordingly, it is appreciated that excellent magnetic characteristic and electromagnetic transformation characteristic of a magnetic layer can be obtained by controlling the groove width of the texture by the acceleration voltage of the ion beam in accordance with the average grain diameter of a foundation film such as a Cr film of a magnetic recording medium.

It should be noted that the average surface roughness of the substrate, the groove width and the average groove depth were measured using AFM. The magnetic characteristic was measured using a vibration sample type magnetometer. The electromagnetic transformation characteristic was measured using a compound type magnetic head having a commercially available spin stand, a recording element and a GMR element integrated with each other. The resolution was obtained from a relationship an average output of a recording density 367.8 kFCI /an average output of a recording density 92.0 kFCL X 100. Additionally, S/Nm was obtained from a ratio of a reproduction output of 367.8 kFCI to a medium noise.

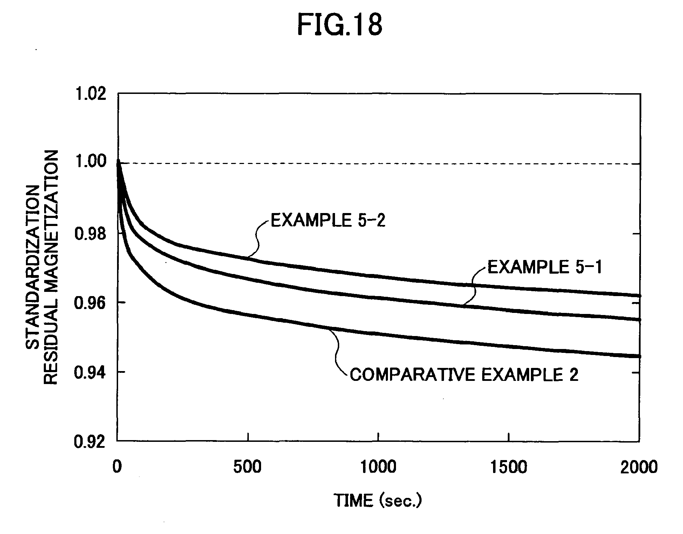

FIG. 18 is a graph showing changes in the residual magnetization of the examples 5-1 and 5-2 with passage of time. The residual magnetization with passage of time was measured by magnetizing samples, which are cut off from the magnetic disks of the examples 5-1 and 5-2, along a longitudinal direction of the textures and while applying a magnetic field of 1 kOe in a direction opposite to the direction of the magnetization.

With reference to FIG. 18, a reduction in the residual magnetization of the examples 5-1 and 5-2 was suppressed more than that of the comparative example 2. That is, it is appreciated that the examples 5-1 and 5-2 are superior to the comparative example 2 in the thermal stability of the residual magnetization. Normally, the thermal stability of the residual magnetization is a characteristic that degrades if the recording density is increased. Accordingly, it is appreciated that the magnetic disks according to the examples 5-1 and 5-2 are suitable for high-density recording.

Further, since a rate of reduction in the residual magnetization of the example 5-2 is lower than that of the example 5-2, it is appreciated that the example 5-2 is superior to the example 5-1. It is considered that this is because that the degree of orientation of the easy magnetization axis in a circumferential direction of the example 5-2 is higher than that of the example 5-1 and a uniaxial anisotropic constant Ku in the circumferential direction is increased.

According to the examples 5-1 through 5-3, a magnetic recording medium suitable for high-density recording can be realized by manufacturing the magnetic recording medium using a texture substrate formed by an ion beam.

### (Second Embodiment)

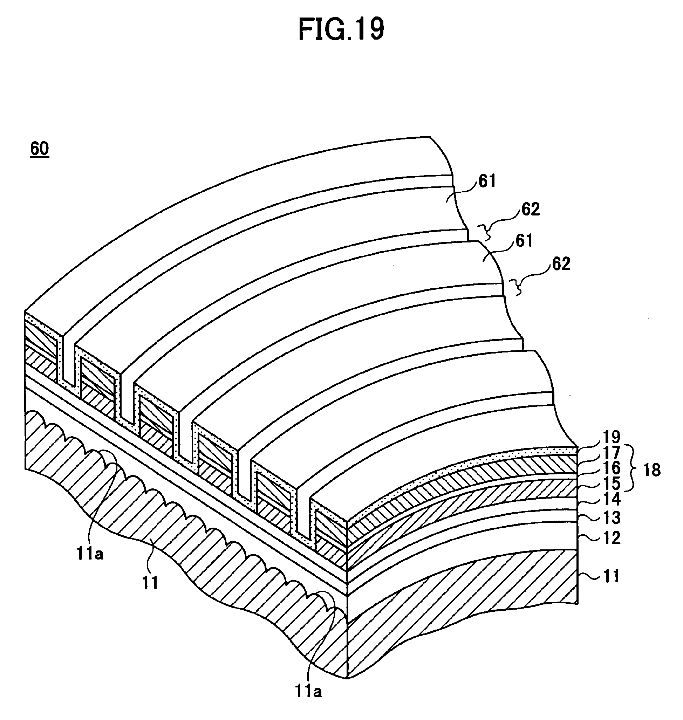

FIG. 19 is a cross-sectional view showing a part of a magnetic recording medium according to the second embodiment of the present invention. In FIG. 16, parts that are the same as the parts described above are given the same reference numerals, and descriptions thereof will be omitted. In the second embodiment, a case where the magnetic recording medium is formed using a disk-shaped substrate is described as an example.

With reference to FIG. 19, the magnetic recording medium 60 according to second embodiment comprises track areas 61, on or from which information is recorded or reproduced, and inter-track areas 62

The track areas 61 and the inter-track areas 62 are arranged in a concentric manner. Each track area 61 has a structure substantially the same as the first embodiment. That is, each track area 62 comprises the substrate on which the texture 11a having many grooves formed on the surface in a circumferential direction and the seed layer seed layer 12, the foundation layer 13, the nonmagnetic intermediate layer 14, the first magnetic layer 15, the nonmagnetic coupling layer 16, the second magnetic layer 17 and the protective film 19, that are sequentially deposited on the substrate 11. Moreover, the inter-track area 62 comprises the substrate 11a on which the texture 11a is formed and the seed layer 12, the foundation layer 13, the nonmagnetic intermediate layer 14 and the protective film 19 that are sequentially deposited on the substrate 11. That is, in the inter-track area 62 is not provided with the first magnetic layer 15, the nonmagnetic coupling layer 16 and the second magnetic layer 17 which together form the recording layer 18.

The magnetic recording medium 60 is formed, in the same manner as the magnetic recording medium according to the first embodiment, by forming the layers up to the second magnetic layer 17 and then removing the recording layer 18 in each inter-track layer 62 by etching. Specifically, a photoresist layer is formed on a surface of the second magnetic layer 17 and the pattern corresponding to the inter-track areas is exposed and developed so as to expose the second magnetic layer 17 of each inter-track area. Then parts of the recording layer 18 is etched by an ion-milling method or a RIE method. At this time, the nonmagnetic intermediate layer 14, and further the foundation layer 13 and the seed layer 12 may be etched. On the other hand, only the second magnetic layer may be removed. Then, the photoresist film is removed, and the protective film is formed so as to cover the etched surface and the second magnetic layer 17 of the track area 61, and the magnetic recording medium is completed.

According to the magnetic recording medium 60 according to the second embodiment, a so-called side erase, which deletes information of an adjacent track area 61 due to a recording magnetic field leaking in a direction of a width of the magnetic head to the track area 61, can be suppressed or prevented by providing the inter-track areas 62, where the recording layer 18 is not provided, between adjacent track areas 61. Further, a magnetic interaction between adjacent track areas 61 can be cut, which reduces a medium noise of the magnetic recording medium 60.

Moreover, according to the magnetic recording medium 60 according to the second embodiment, a degree of orientation of the track area 61 in a circumferential direction, that is a recording direction of the recording layer 18 is improved according to the texture 11a formed on the surface 11a of the substrate 11.

Therefore, since a degree of orientation of the recording layer 18 in a circumferential direction is high even if a track density (a number of track areas 61 per unit length in a circumferential direction) is increased by reducing a width of each of the track areas 61, a reproduction output is high and a high-density recording can be achieved.

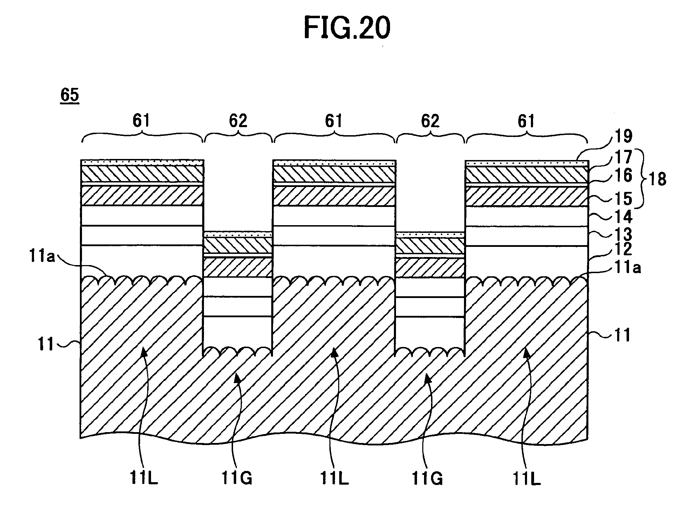

FIG. 20 is a cross-sectional view of a variation of the magnetic recording medium according to the second embodiment of the present invention. In FIG. 17, parts that are the same as the parts mentioned before are given the same reference numerals, and descriptions thereof will be omitted.

With reference to FIG. 20, the magnetic recording medium 65 according to the variation of the second embodiment has the same structure as the magnetic recording medium 60 according to the second embodiment except for surfaces of the substrate where the track areas 61 are located being higher than surfaces of the substrate where the inter-track areas 62 are located. The magnetic recording medium 65 comprises: a substrate 11 on which the texture 11a having many grooves formed in a circumferential direction and the seed layer 12, the foundation layer 13, the nonmagnetic intermediate layer 14, the first magnetic layer 15, the nonmagnetic coupling layer 16, the second magnetic layer 17 and the protective film 19, which are sequentially deposited on the substrate 11.

The substrate 11 includes so-called land areas 11L provided at positions corresponding to the track areas 61 and groove areas 11G provided at positions corresponding to the inter-rack areas 62. The land areas 11L and the groove areas 11G are formed in a concentric arrangement. A level difference between the land areas 11L and the groove areas 11G is set to be larger than the thickness of the second magnetic layer 17. According to the above-mentioned setting, the adjacent track areas 61 are separated by the inter-track area 62 and the magnetic interaction between the track areas 61 can be cut off.

The same texture 11a as the magnetic recording medium according to the first embodiment is formed on the surfaces of the land areas 11A and the groove areas 11G in a circumferential direction. It should be noted that the texture 11a may be formed only on the surfaces of the land areas 11L.

In a manufacturing method of the magnetic recording medium 65, a photoresist film is formed on a surface of the photoresist film, the surface is exposed to an ultraviolet beam or an X-ray using a mask having a pattern of the groove areas 11G, and is developed so as to expose the surface of the substrate corresponding to the groove areas. Then, the surface of the substrate 11 is etched by ion milling method or an RIE method so as to form the groove areas, and, then, the photoresist is removed.

Subsequently, the texture is formed on the surface of the substrate 11 in the same manner as the magnetic recording medium, and the layers from the seed layer 12 to the protective film 19 are formed using a sputtering apparatus. Further, a lubrication layer may be formed on the protective film 19.

In the texture forming process of the variation of the second embodiment, it is difficult to contact pads onto the land areas 11L according to the conventional mechanical texture forming method mentioned above, and it is difficult to form a mechanical texture on the land areas 11L on the surfaces of the land areas 11. On the other hand, a texture can be uniformly formed on the surface by irradiating an ion beam onto the surface of the land areas 11L using the texture forming method according to the present invention as explained with reference to FIG. 6. Moreover, since the same condition as the formation of texture on a flat surface of the substrate can be used, the texture can be easily formed.

Moreover, as a method of forming the land areas and the groove areas on the surface of the substrate 11, a stamper having concave portions corresponding to the land areas and convex portions corresponding to the groove areas are formed beforehand by electron beam drawing. Subsequently, a resist film is formed on the surface of the substrate 11. The stamper is pressed onto the resist film when the resist film is half cured so that the resist film is formed in a configuration that portions corresponding to the land areas are convex and portions corresponding to the groove areas are concave. Subsequently, the surface of the substrate at positions corresponding to the land areas is exposed by an ion-milling method or an RIE method. Further, after changing the ionic species, the substrate surface is etched by an ion-milling method or an RIE method so as to form the groove areas. Then, the resist film is removed. According to the above-mentioned process, the land areas 11L and the groove areas 11G are formed on the surface 11 of the substrate.

In the magnetic recording medium 65 according to the variation of the second embodiment, by forming the land areas 11L and the groove areas 11G are formed on the surface 11 of the substrate, etching on the second magnetic layer 17 can be eliminated, which prevents occurrence of an obstacle such a drop out due to fine particles generated by etching. Moreover, the magnetic recording medium 65 according to the variation of the second embodiment, has the same effects as the magnetic recording medium 60 according to the second embodiment of the present invention.

It should be noted that the magnetic recording medium according to the second embodiment and the variation of the second embodiment, the texture layer 51 may be provided between the substrate 11 and the seed layer 12 so as to form the texture 51a on the surface of the texture layer 51, similar to the variation of the first embodiment shown in FIG. 10, instead of forming the texture 11a on the surface of the substrate 11.

Moreover, although a lubrication layer on the protective film 19 is omitted in the magnetic recording medium according to the second embodiment and its variation, the lubrication layer similar to the magnetic recording medium according to the first embodiment may be provided. Moreover, in the magnetic recording medium according to the second embodiment and its variation, the seed layer 12 and the nonmagnetic intermediate layer 14 may be provided similar to the first embodiment or may not always be provided.

### (Third Embodiment)

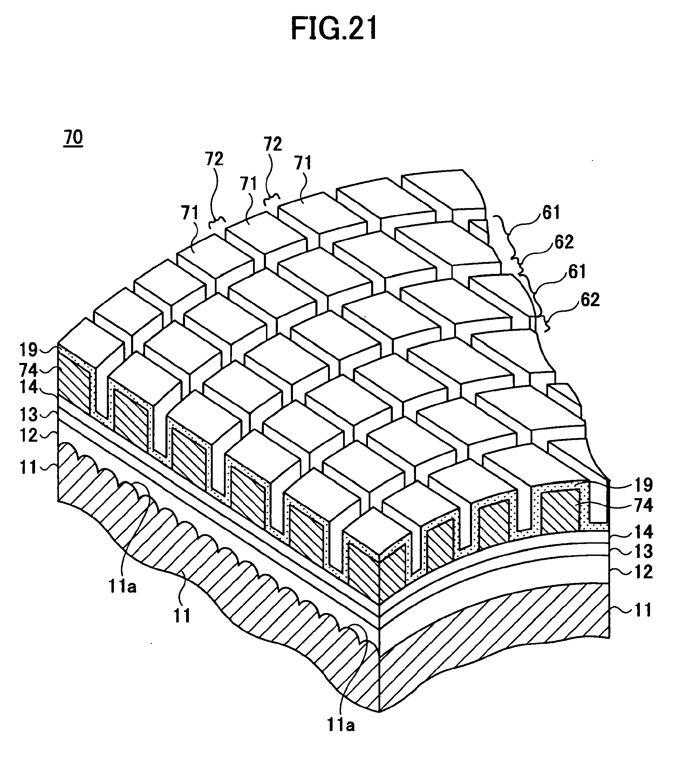

FIG. 21 is a cross-sectional view showing a part of a magnetic recording media according to a third embodiment of the present invention. In FIG. 21, part that are described before area given the same reference numerals, and descriptions thereof will be omitted. In the present embodiment, a case where the magnetic recording medium is formed using a disk-shaped substrate is described as an example.

With reference to FIG. 21, the magnetic recording medium 70 according to the present embodiment includes track areas 61, on or from which information is recorded or reproduced, and inter-track areas 62 separating the adjacent tracks 61. Each of the track areas 61 is provided with recording cells 71 and inter-cell areas 72 between adjacent recording cells 71 arranged in a circumferential direction.

The magnetic recording medium 70 is different from the magnetic recording medium according to the second embodiment shown in FIG. 16 in that each of the track areas 61 includes many recording cells 71 separated each other by the inter-cell areas 72 in a circumferential direction.

Each of the recording cells 71 comprises the substrate 11 on which the texture 11a having many grooves are formed and the seed layer 12, the foundation layer 13, the nonmagnetic intermediate layer 14, a recording layer 74 and the protective film 19 deposited sequentially on the substrate 11.

Each of the inter-cell areas 72 and each of the inter-track areas 62 comprises the substrate 11 on which the texture 11a is formed and the seed layer 12, the foundation layer 13, the nonmagnetic intermediate layer 14 and the protective film 19 deposited sequentially on the substrate 11.

One recording cell serves as a minimum recording unit. That is, the recording layer 74 of one recording cell serves as a magnetic body of single magnetic domain, which is magnetizable in only one direction. Since the adjacent recording cells 71 are separated by the inter-cell areas 72, a magnetic interaction between the recording layers 74 of the adjacent recording cells 71 is cut off, which prevent an increase in a medium noise.

Moreover, when the recording layer 18 is continuous in a circumferential direction as in the track areas of the magnetic recording medium 60 according to the second embodiment, Cr is added to the ferromagnetic material of the first and second magnetic materials 15 and 17 so as to separate crystal grains from each other by segregation of Cr which forms a nonmagnetic area (an area containing a large amount of Cr) on the boundary of adjacent crystal grains. The boundary of the crystal grains serves as a boundary part which separated two adjacent magnetized areas in opposite directions. On the other hand, since the recording cell 71 is separated by the inter-cell area 72 in the recording layer 74 of the magnetic recording medium 70, a content of Cr can be reduced, or Cr is not necessarily added. Therefore, since a ferromagnetic material containing few Cr or no Cr at all, that is, a ferromagnetic material having higher saturated magnetic flux density can be used for the recording layer 74, a state of magnetization of the recording cell 71 is stable thermally as well.

As such a material of the recording layer 74, there are Co and CoCr (Cr contents is higher than 0 atomic % and equal to or lower than 25 atomic %). Furthermore, as a material of the recording layer 74, there are CoCrTa, CoCrPt and CoCrPtB, which have Cr contents higher than 0 atomic % and equal to or lower than 20 atomic %, and CoCrPt-M2 (M2=B, Mo, Nb, Ta, W, Cu and a kind selected from an alloy of the aforementioned elements).

The recording layer 74 may be formed by a ferromagnetic material the same as that of the first magnetic layer 15 or the second magnetic layer 17 of the magnetic recording layer according to the first embodiment. Furthermore, the recording layer 74 may have a stacked layer structure formed by the first magnetic layer 15, the nonmagnetic coupling layer 16 and the second magnetic layer 17 similar to the magnetic recording layer according to the first embodiment.

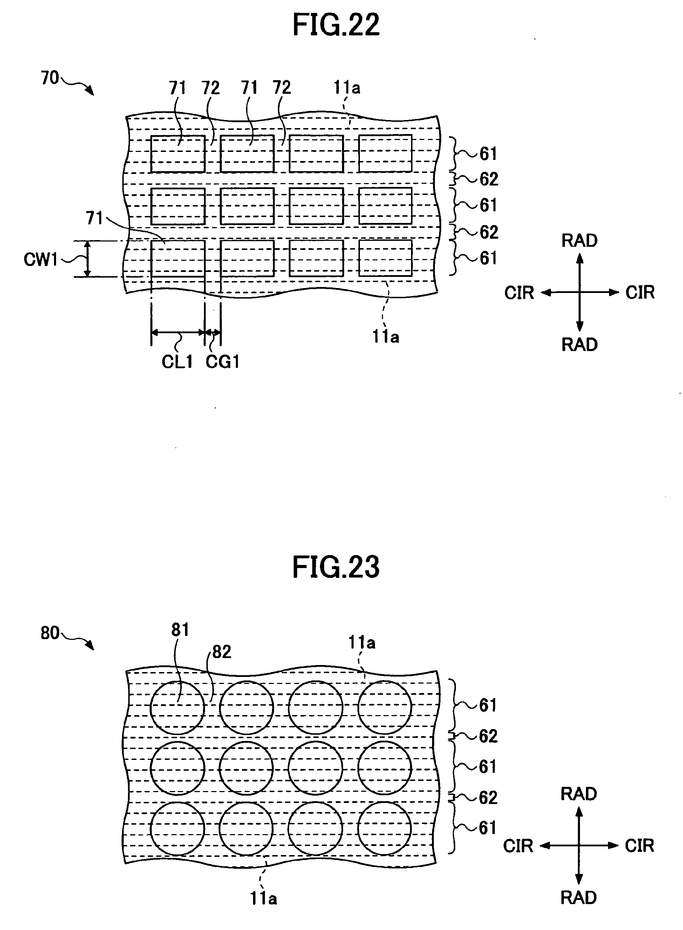

FIG. 22 is a plan view of a part of the magnetic recording medium according to the third embodiment of the present invention. That is, FIG. 22 is a plan view of the magnetic recording medium shown in FIG. 21.

Referring to FIG. 22, since the texture 11a is formed on the surface of the substrate 11 along a circumferential direction (CIR direction), the easy magnetization axis of the recording layer 74 of the recording cell 71 is oriented in the circumferential direction. Thus, a uniaxial anisotropy along a circumferential direction is increased, which results in that the recording layer 74 can be easily made as a single magnetic domain and, which prevents the recording layer 74 from being made to a multiple magnetic domain. The same happens in the magnetic recording media according to the second example and the third example of the third embodiment shown in FIG. 22 and FIG. 23, respectively.

The size of the recording cell 71 is appropriately selected in accordance with a linear recording density and a truck density of the magnetic recording medium 70. For example, when the linear recording density (recording density in the CIR direction) is 40 k bit/mm (1.0 Mbit/inch), a length CL1 of the recording cell 71 is set to, for example, 20 nm and a length CG1 of the inter-cell area 72, that is, a gap between the adjacent recording cells 71 in the CIR direction is set to, for example, 5 nm. It is preferable to set the length CG1 of the inter-cell area 72 equal to or greater than 0.5 nm in respect of cutting a magnetic interaction between the adjacent recording cells 71. It should be noted that the "bit" of a unit of the linear recording density means one magnetic reversal.

Moreover, when the track density (track density in the RAD direction) is 40 k track/mm (1.0 M track/inch), a width CW1 of the recording cell 71, that is, a width of the track area 61 is set to, for example, 20 nm and a width of the inter-cell area 72 is set to, for example, 5 nm. By setting as mentioned above, the linear recording density and the track density are set to 40 k bit/mm and 40 k track/mm, respectively, and the recording density per unit area is 1.6 Mbit/mm² (1 Tbit/inch²).

Although the coercive force of the recording layer 74 in a circumferential direction (CIR direction) is appropriately selected in accordance with the length CL1 and the width CW1 of the recording cell 71, the length CG1 of the inter-cell area 72 and a thickness of the recording layer 74, is it possible to achieve a high recording density even in the recording layer 74 having a coercive force smaller than that of a conventional magnetic recording medium since the recording cell 71 has an extremely small demagnetizing field thereof and an extremely small magnetic interaction received from the adjacent recording cell 71. The coercive force of the recording layer 74 in a circumferential direction (CIR direction) is set to a value within a range from 7.9 kA/m to 395 kA/m.

FIG. 23 is a plan view of a part of a magnetic recording medium according to a variation of the third embodiment of the present invention. In FIG. 23, parts that are the same as the parts explained before are given the same reference numerals, and descriptions thereof will be omitted.

With reference to FIG. 23, the magnetic recording medium 80 has recording cells 81 each of which has a circular shape (or an elliptic shape). The magnetic recording medium 80 has a structure the same as the recording medium according to the third embodiment except for the shape of each recording cell 81 being changed. The configuration of the recording cell 81 is not limited to a circular shape of an elliptic shape if a magnetic interaction between the adjacent recording cells 81 can be cut.

The magnetic recording medium 80 according to the variation of the third embodiment has the same effects as the magnetic recording medium according to the third embodiment.

It should be noted that, the manufacture method of the magnetic recording media according to the third embodiment and its variation is the same as that of the magnetic recording medium according to the second embodiment, and a description thereof will be omitted.

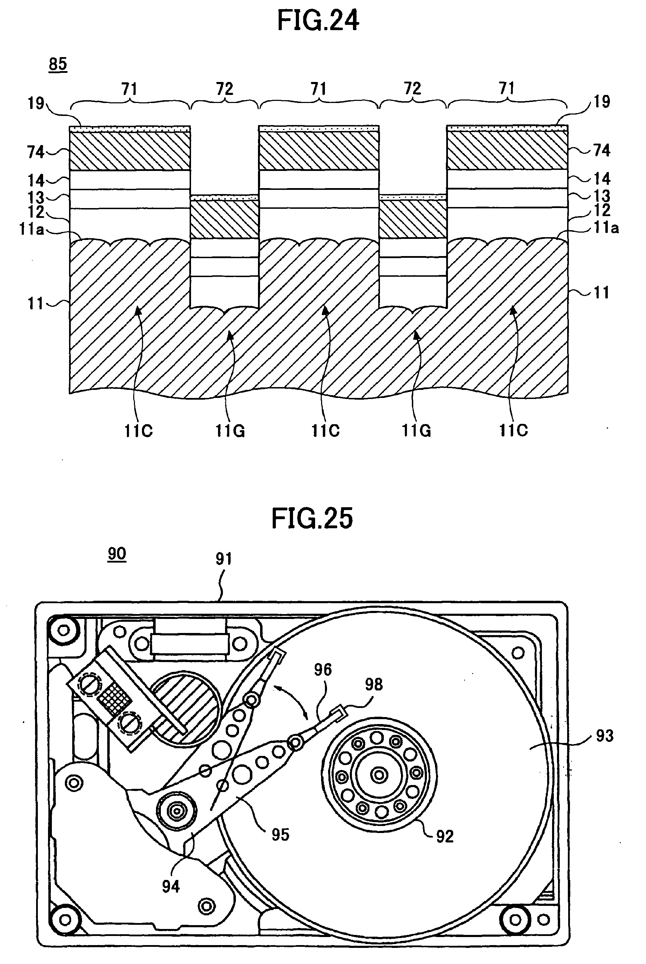

FIG. 24 is a cross-sectional view of a part of a magnetic recording medium according to another variation of the third embodiment of the present invention. In FIG. 24, parts that are the same as the parts explained before are given the same reference numerals, and descriptions thereof will be omitted.

With reference to FIG. 24, the magnetic recording medium 85 according to the another variation of the third embodiment has substantially the same structure as the magnetic recording medium according the third embodiment except for a substrate surface on which the recording cells 71 are located being formed higher than a substrate surface on which the inter-track area is formed. The magnetic recording medium 85 comprises the substrate 11 on which the texture 11a having many grooves formed on the surface along a circumferential direction and the seed layer 12, the foundation layer 13, the nonmagnetic intermediate layer 14, the recording layer 74 and the protective film 19 that are sequentially deposited on the above-mentioned substrate 11.

The substrate 11 has convex areas 11C provided at positions corresponding to the recording cells and concave areas 11G provided at positions corresponding to the inter-cell areas 72. The convex areas 11C and the concave areas 11G are arranged along a circumferential direction. A level difference between the convex areas 11C and the concave areas 11G is preferably set to be larger than the thickness of the recording layer 74. Thus, the adjacent recording cells 71 are separated from each other by the inter-cell area 72 so as to cut a magnetic interaction between the adjacent recording cells 71.

The texture 11a, which is the same as the texture 11a of the magnetic recording medium according to the first embodiment, is formed on the surfaces of the convex areas 11C and the concave areas 11G of the substrate 11 in a substantially circumferential direction. FIG. 24 shows the texture 11a having unevenness of a long period. This indicates a state where a plurality of grooves forming the texture 11a are intersecting with each other or formed slightly off from a circumferential direction.

It should be noted that the texture 11a may be formed on only the surfaces of the convex areas 11C and the texture 11a is not necessarily formed on the surfaces of the concave areas 11G.

The manufacturing method of the magnetic recording medium 85 is the same as that of the magnetic recording medium according the variation of the second embodiment, and descriptions thereof will be omitted. It should be noted that, in the texture forming process, it is difficult to bring pads in contact with the convex areas 11C of the substrate 11 with a uniform pressure according to the method of forming the conventional mechanical texture and, thus, it is difficult to uniformly form the texture 11a on the surfaces of the convex portion 11C. However, by irradiating an ion beam onto the surface of the substrate 11 using the texture forming method according to the present invention explained with reference to FIG. 6, the texture can be uniformly formed on the surfaces of the convex areas 11C. Moreover, since a condition the same as that in a case where the texture is formed on a flat surface of the substrate can be used, the texture can be formed easily.

The magnetic recording medium 85 according to the another variation of the third embodiment can be formed by forming the convex areas 11C and the concave areas 11G on the surface of the substrate 11 without etching the recording layer 74, which eliminate an obstacle such as a drop out due to fine particles generated by etching.

Moreover, the magnetic recording medium 85 according to the another variation of the third embodiment has the same effects as the magnetic recording medium 70 according to the third embodiment.

It should be noted that the magnetic recording medium according to the third embodiment and the variations of the third embodiment, the texture layer 51 may be provided between the substrate 11 and the seed layer 12 so as to form the texture 51a on the surface of the texture layer 51, similar to the variation of the first embodiment shown in FIG. 10, instead of forming the texture 11a on the surface of the substrate 11.

Moreover, although a lubrication layer on the protective film 19 is omitted in the magnetic recording media according to the third embodiment and the variations of the third embodiment, the lubrication layer similar to the magnetic recording medium according to the first embodiment may be provided. Moreover, the seed layer 12 and the nonmagnetic intermediate layer 14 may be provided similar to the first embodiment or may not always be provided.

### (Fourth Embodiment)

The fourth embodiment relates to a magnetic storage apparatus equipped with one of the magnetic recording media according to the first to third embodiment and their variations.

FIG. 25 is a plan view of a magnetic storage apparatus according to the fourth embodiment of the present invention. Referring to FIG. 25, the magnetic storage apparatus 90 has a housing 91. In the housing 91, there are provided a hub 92 driven by a spindle (not shown in the figure), a magnetic recording medium 93 fixed to and rotated by the hub 92, an actuator unit 94, an arm 95 and a suspension 96 mounted on the actuator unit 94 and movable in a radial direction of the magnetic recording medium 93, and a magnetic head 98 supported by the suspension 96. A recording/reproducing head 77 is a composite type head of a reproducing head and a induction type recording head, the reproducing head being a magnetoresistive element (MR element), a giant magnetoresistive element (GMR element) or a tunnel magnetoresistive element (TMR element). The basic structure of the magnetic storage apparatus 90 itself is known, and a description thereof will be omitted.

The magnetic storage apparatus 90 according to the present embodiment has a feature in the magnetic recording medium 93. The magnetic recording medium 93 is one of the magnetic recording media according to the first embodiment and the variation of the first embodiment, the magnetic recording media according to the second embodiment and the variation of the second embodiment and the magnetic recording media concerning to the third embodiment and the variations of the third embodiment. The magnetic recording medium 93 had a texture formed on the surface of the substrate or the texture layer, the texture having many grooves on the substrate surface that extends in a direction substantially parallel to the recording direction and arranged in a direction perpendicular to the recording direction at a substantially predetermined intervals. Therefore, a degree of orientation of the recording layer of the magnetic recording medium 93 in a circumferential direction is high, which achieves a high recording density of the magnetic recording apparatus 90.

It should be noted that the basic structure of the magnetic storage apparatus 90 according to the present embodiment is not limited to one shown in FIG. 25, and recording/reproducing head 98 is not limited to the above-mentioned structure and a known recording/reproducing head may be used.

It should be noted that, although the magnetic disk was explained as an example of the magnetic recording medium 93, a tape-like substrate may be used instead of the disk-shaped substrate such as, for example, a PET tape, a PEN tape or a magnetic tape using a plastic film made of polyimide or the like. When the recording direction matches a longitudinal direction of the plastic film, the formation of the texture is performed by irradiating an ion beam in a direction of the above mentioned irradiating angle to a direction perpendicular to the surface within a plane formed by a direction of a width of the plastic film and a direction perpendicular to the surface.

The present invention is not limited to the specifically disclosed embodiments, and variations and modifications may be made without departing from the scope of the present invention.

## Claims

1. A magnetic recording medium for recording information by magnetizing a recording layer in a predetermined recording direction, the magnetic recording medium comprising:
a substrate;
a foundation layer formed on said substrate; and
the recoding layer formed on said foundation layer,
**characterized in that**: -
a texture having a plurality of grooves is formed under said foundation layer, the grooves extending in a direction substantially parallel to the predetermined recording direction and being arranged at substantially predetermined intervals in a direction perpendicular to the predetermined recording direction.

2. The magnetic recording medium as claimed in claim 1, wherein said texture is formed on a surface of said substrate.

3. The magnetic recording medium as claimed in claim 1, further comprising a texture layer formed on said substrate, and said grooves are formed on a surface of said texture layer.

4. The magnetic recording medium as claimed in claim 1, wherein said predetermined intervals are selected from values within a range from 8 nm to 33 nm.

5. The magnetic recording medium as claimed in claim 1, wherein a number of said grooves per 1 µm in a direction perpendicular to the recording direction is within a range from 30 to 125.

6. The magnetic recording medium as claimed in claim 1, wherein said texture includes a plurality of convex parts each having a cross section taken along a direction perpendicular to the recording direction is convex upward, each of the convex parts being arranged between the adjacent grooves and extending in the recording direction.

7. The magnetic recording medium as claimed in claim 3, wherein said texture layer is made of an amorphous material or a polycrystalline material.

8. The magnetic recording medium as claimed in claim 3, wherein said texture layer is formed of a dielectric material.

9. The magnetic recording medium as claimed in claim 1, further comprising a seed layer between said substrate and said foundation layer, wherein said seed layer is formed of a material selected from a nonmagnetic NiP, a nonmagnetic CoW, a nonmagnetic CrTi and an alloy containing three or more elements and an alloy of the aforementioned as a main component.

10. A magnetic recording apparatus comprising:
a plurality of track areas formed on a substrate and extending in a recording direction, the track areas being arranged in a direction of a width of said track areas perpendicular to the recording direction; and
a plurality of inter-track areas provided between adjacent ones of said track areas, respectively,
**characterized in that**:
each of said track areas includes a foundation layer formed on said substrate and a recording layer formed on said foundation layer; parts of said recoding layers in said adjacent ones of said track areas is separated from each other by on of said inter-track areas; and a texture having a plurality of grooves is formed under said foundation layer, the grooves extending in a direction substantially parallel to the predetermined recording direction and being arranged at substantially predetermined intervals in a direction perpendicular to the predetermined recording direction.

11. The magnetic recording apparatus as claimed in claim 10, wherein said substrate has surface parts corresponding to said track areas protruding from surfaces corresponding to said inter-track areas.

12. A magnetic recording apparatus comprising:
a plurality of track areas formed on a substrate and extending in a recording direction, the track areas being arranged in a direction of a width of said track areas perpendicular to the recording direction; and a plurality of inter-track areas provided between adjacent ones of said track areas, respectively,
**characterized in that**:
each of said track areas includes a plurality of recording cells arranged in the recording direction and a plurality of inter-cell areas each of which is sandwiched by adjacent ones of said recording cells; each of said recording cells includes a foundation layer formed on said substrate and a recording layer formed on said foundation layer; said recoding layers in adjacent ones of said recording cells are separated from each other by one of said inter-cell areas; and a texture having a plurality of grooves is formed on a surface of said substrate, the grooves extending in a direction substantially parallel to the recording direction and being arranged at substantially predetermined intervals in a direction perpendicular to the recording direction.

13. The magnetic recording apparatus as claimed in claim 12, wherein the surface of said substrate includes surface parts corresponding to said recording cells and protruding from surface parts corresponding to said inter-cell areas, and said texture is formed on said surface parts corresponding to said recording cells.

14. The magnetic recording layer as claimed in claim 12, wherein said texture is formed on surface parts corresponding to said recording cells.

15. The magnetic recording layer as claimed in claim 12, wherein each of said recording cells has a cross-section having a substantially rectangular shape or a substantially elliptic shape.

16. A substrate configured to be used in a magnetic recording medium for recording information by magnetizing a recording layer in a predetermined recording direction, said substrate comprising a surface above which said recording layer is formed,
**characterized in that**:
a texture is formed on said surface, said texture having a plurality of grooves extending in a direction substantially parallel to the predetermined recording direction and arranged in a direction perpendicular to the recording direction at substantially predetermined intervals.

17. A substrate configured to be used in a magnetic recording medium for recording information by magnetizing a recording layer in a predetermined recording direction,
**characterized by**:
a texture layer; and
a texture formed on a surface of said texture layer, said texture having a plurality of grooves extending in a direction substantially parallel to the predetermined recording direction and arranged in a direction perpendicular to the recording direction at substantially predetermined intervals.

18. A substrate configured to be used in a disk-shaped magnetic recording medium,
**characterized in that**:
the substrate has a texture formed on a surface thereof, the texture having a plurality of grooves formed on said surface and extending in a circumferential direction of said substrate, said plurality of grooves being formed in a self-assembling manner by irradiating an ion beam onto said surface of said substrate in a predetermined direction.

19. A substrate configured to be used in a disk-shaped magnetic recording medium,
**characterized in that**:
the substrate has a texture layer having a surface on which a texture is formed, the texture having a plurality of grooves formed on said surface and extending in a circumferential direction of said substrate, said plurality of grooves being formed in a self-assembling manner by irradiating an ion beam onto said surface of said texture layer in a predetermined direction.

20. A magnetic disk apparatus comprising:
a magnetic disk; and
a recording and reproducing head including a recording element and a reproducing element having a magnetoresistive element,
wherein said magnetic disk including:
a disk-shaped substrate;
a foundation layer formed on said substrate;
a recording layer formed on said foundation layer; and
a texture having a plurality of grooves formed on said substrate, the grooves extending in a circumferential direction of said substrate and arranged in a radial direction of said substrate at substantially predetermined intervals.

21. A manufacturing method of a magnetic recording medium that has a substrate and records information by magnetizing a recording layer formed above the substrate in a predetermined recording direction, the manufacturing method comprising:
a step of forming a texture under said recording layer; and
a step of forming a foundation layer on said texture,
wherein said step of forming said texture includes forming a plurality of grooves by irradiating an ion beam in a predetermined direction, the grooves extending in the recording direction.

22. The manufacturing method as claimed in claim 21, wherein said step of forming said texture forms said grooves on said substrate above which said recording layer is formed.

23. The manufacturing method as claimed in claim 21, further including a step of forming a dielectric film on said substrate above which said recording layer is formed, wherein said step of forming said texture forms said grooves on said dielectric film.

24. The manufacturing method as claimed in claim 21, wherein said predetermined direction lies within a plane defined by a direction perpendicular to said recording direction and a direction perpendicular to a surface of said substrate, and said predetermined direction is inclined with respect to the direction perpendicular to said surface of said substrate by a predetermined irradiating angle.

25. The manufacturing method as claimed in claim 21, wherein said predetermined direction lies within a plane defined by a substantially radial direction of said substrate and a direction perpendicular to said a surface of said substrate, and said predetermined direction is inclined with respect to the direction perpendicular to said surface of said substrate by a predetermined irradiating angle.

26. The manufacturing method as claimed in claim 21, further comprising a step of controlling intervals of said grooves in a direction perpendicular to the recording direction in accordance with an acceleration voltage of said ion beam.

27. The manufacturing method as claimed in claim 21, wherein said ion beam is selected from a group consisting of an Ar ion beam, a Kr ion beam and a Xe ion beam.

28. A texture forming apparatus comprising:
a vacuum chamber;
a substrate holding member on which a substrate is placed, the substrate holding member being provided in said vacuum chamber; and
an ion irradiating unit provided above a surface of said substrate,
**characterized in that**:
said ion irradiating unit irradiates an ion beam onto the surface of said substrate in a predetermined direction so as to form a plurality of grooves extending in a predetermined direction on the surface of said substrate.

29. The texture forming apparatus as claimed in claim 28, wherein said ion irradiating unit includes an ionizing part that ionizes at least one kind of inert gas selected from a group consisting of Ar, Kr and Xe and an acceleration electrode that draws the ionized gas from said ionizing part and accelerates the drawn ionized gas, and said acceleration electrode has a plurality of openings through which the ionized gas is passed, the openings being located in an elongated rectangular or elliptic area in a predetermined direction.

30. The texture forming apparatus as claimed in claim 28, further comprising a shielding plate between said ion irradiating unit and said substrate in said vacuum chamber, wherein said shielding plate has an elongated rectangular opening in a predetermined direction.

31. The texture forming apparatus as claimed in claim 28, further comprising a rotational drive part that rotates said substrate holding member.
